(19)

Europäisches Patentamt

European Patent Office

Office européen des brevets

(11) **EP 3 840 289 A1**

(12) **EUROPEAN PATENT APPLICATION**

(43) Date of publication:
   **23.06.2021   Bulletin 2021/25**

(51) Int Cl.:
   ***H04L 9/32*** (2006.01)

(21) Application number: **20215194.0**

(22) Date of filing: **17.12.2020**

(84) Designated Contracting States:
   **AL AT BE BG CH CY CZ DE DK EE ES FI FR GB GR HR HU IE IS IT LI LT LU LV MC MK MT NL NO PL PT RO RS SE SI SK SM TR**
   Designated Extension States:
   **BA ME**
   **KH MA MD TN**

(30) Priority: **18.12.2019   EP 19217764**

(71) Applicant: **Hahn-Schickard-Gesellschaft für angewandte Forschung e.V.**
   **78052 Villingen-Schwenningen (DE)**

(72) Inventor: **Wigger, Benedikt**
   **70176 Stuttgart (DE)**

(74) Representative: **Burger, Markus et al**
   **Schoppe, Zimmermann, Stöckeler Zinkler, Schenk & Partner mbB Patentanwälte**
   **Radlkoferstraße 2**
   **81373 München (DE)**

(54) **APPARATUS FOR OBTAINING A HASH VALUE ASSOCIATED WITH AN OBJECT, OBJECT IDENTIFIER, METHODS AND COMPUTER PROGRAM**

(57)     This invention is related to an apparatus (100; 150) for obtaining a hash value (100a) associated with an object (110). The apparatus (100; 150) is configured to apply a multi-dimensional transform to an image (120a) of the object (110) or of a surface of the object (110), in order to obtain a multi-dimensional array (600) of transform coefficients.

Furthermore, the apparatus (100; 150) is configured to obtain the hash value (100a) using transform coefficients (1110), for which a first of the transform coefficient indices is smaller than a first predetermined value but for which a second of the transform coefficient indices is equal to or larger than a second predetermined value.

In addition, the apparatus (100; 150) is configured to obtain the hash value (100a) using transform coefficients (1110) for which the second of the transform coefficient indices is smaller than the second predetermined value but for which the first of the transform coefficient indices is equal to or larger than the first predetermined value.

Moreover, the apparatus (100; 150) is configured to obtain the hash value (100a) while leaving transform coefficients (1110) for which the first transform coefficient index is smaller than the first predetermined value and for which the second transform coefficient index is smaller than the second predetermined value unconsidered in the determination of the hash value (100a).

Fig. 1

EP 3 840 289 A1

**Description**

<u>Technical Field</u>

Embodiments according to the invention are related to Apparatuses for obtaining a Hash Value associated with an Object, Object Identifiers, Methods and Computer Programs.

Embodiments according to the invention are related to obtaining a hash value associated with an object based on transform coefficients. Further embodiments are related to robust and fast traceability, e.g. part traceability, in a production chain exploiting inherent, individual surface patterns.

<u>Background of the invention</u>

In the following an overview and an introduction of the background of the invention is given.

Overview

Traceability of single parts is essential in automated manufacturing, especially considering recent developments in Industry 4.0 or Smart Manufacturing. In some cases, however, conventional traceability methods, e.g. barcode, DMC (e.g. data-matrix-code) or RFID (e.g. radio-frequency identification), are not sufficient to track individual components through their entire production chain.

1. Introduction

Large-scale production of customized products, automatic production control by autonomous machines or ubiquitous provision of individual production data are trends for Industry 4.0 and Smart Manufacturing. These concepts require the individual identification of objects throughout the entire production processes and even beyond [1]. While individual tracking of parts and products is expected to become even more relevant in the factory of the future, the traceability of components is already used nowadays for tamper-evidence, production control and logistics optimization. Labels like barcode or data-matrix-code (DMC) as well as RFID, therefore, are industrially established methods to link a component with an individual ID (e.g. identifier) [2, 3]. However, the established methods have several drawbacks. Firstly, providing that the parts are tracked from manufacturing to the final costumer, the labelling strategies in particular are vulnerable towards counterfeiting as an attacker can duplicate the ID easily. Other concerns are related to the part itself or processes within the manufacturing line. For example, the label or tag is usually attached in a separate process after the part's fabrication. This causes running costs and the part's individual production data cannot be tracked from the first production step. Adding a label or tag, furthermore, alters the original part what sometimes prevents or restricts their use, e.g., due to optical or hygienic reasons or as a result of admission restrictions. In the case of mass-produced parts, traceability is often renounced as the running costs can make labelling and RFID uneconomic.

1.1 Related work

In the following related work will be discussed.

Due to the mentioned drawbacks of the established traceability strategies, several alternate methods for the purpose of object identification are proposed in the literature. Most of these methods, however, address the counterfeiting issue. As a result, one kind of object identification strategy is to create an unclonable tag that is attached on or embedded into the product's surface [4]-[12]. The tag reveals unique patterns resulting from non-controllable, random processes during the tag's creation. This kind of anti-counterfeiting strategy is commercially accessible in various forms, e.g., provided by the companies *prooftag* [13] or *Alpvision* [14].

In contrast, the *Fingerprint of Things (FoT)* [15] exploits inherent surface patterns of an object for the purpose of its identification. The uniqueness of the surface pattern is caused by small, random variations in the object's manufacturing process and has been demonstrated for paper [16]-[18], plastic samples [19], metals [15],[20]-[22], cork [23] and is supposed even for other materials [24].

As the unique surface patterns of an object are created by random variations during its manufacturing process, the FoT provides the same secure protection against counterfeiting as adding an unclonable tag. Furthermore, the FoT neither causes running costs for adding a unique identifier nor requires an additional process step or alters the object's surface. Thus, there are patents and commercially accessible products for the purpose of object identification that are based on the FoT:

- A patent claims a specific method to identify an object based on its individual surface microstructures using cross correlation of images [25]. The related company offers its *AlpVision Fingerprint*® [14] software which enables authentication and batch tracking of molded parts. However, according to the company's website, the technique is limited to parts that are manufactured by molding, stamping, rolling or tooling. Furthermore, individual part tracking is not provided.

- A withdrawn patent application describes a method to identify an object based on its individual surface topography [26]. The related company *Bayer Technology Services* presented their *Protexxion* system in 2006 serving secure part identification. However, the hardware comprises a laser system to capture the object's surface texture making the system costly and the image capturing process expensive.

- The company *covisus* offers its *vtag*® solution exploiting intrinsic surface features for object identification [27]. The surface patterns are captured in a digital image. Subsequently, a unique signature linked to the part is generated by the image data. According to the company's website, the vtag® technology, however, is limited to surfaces that are "not modified between enrollment and authentication". The vtag® is, therefore, not applicable to track parts whose surfaces are altered due to the impact of manufacturing.

These works, however, mainly focus on anti-counterfeiting as well and have specific drawbacks that prevent their use for the purpose of simple and low-cost part tracking within a production chain. Besides, considering the industrial application of such a traceability system further information about the identification's reliability, runtime and robustness are demanded. Part tracking based on the FoT, hence, is still under research:

- A group of researchers from the NEC Corporation have published several articles proposing a system to track bolts and similar metal parts in a production chain [15, 20, 28]. The system takes surface pattern images of the metal parts under special lighting. The identification algorithm was initially based on image feature matching. However, Ishyiama et al. recently proposed an identification algorithm based on Fourier-Mellin Phase Correlation accelerating the identification process significantly [29]. The experimental results demonstrate that their approach performs accurate part identification.
  The works, however, are limited to unprocessed metal parts like bolts. Thus, the methods' applicability to other materials and the identification's robustness against surface alterations may for example be further examined.
- Prior work related to this disclosure demonstrates part tracking based on the FoT in a production environment [30]. The traceability method's robustness against production specific impacts on the samples' surface is demonstrated as PCB (e.g. printed circuit board) samples are tracked successively in a SMD (e.g. surface-mounted device) assembly line.
  Since the identification algorithm, however, is based on template matching, the identification process is CPU-intensive and it has been found that it may be advantageous to accelerate it.

The researchers from the *Fraunhofer Institute for Physical Measurement Techniques (IPM)* have also developed a system for individual part tracking based on the FoT [31]. Although the system was examined extensively [32], the technical implementation is not published.

According to the related works, literature does not provide an overall concept for individual part tracking that is low-cost, fast, automatable, reliable and robust against surface alterations. However, this is advantageous or for example, in some cases even necessary considering the FoT as a promising complement to conventional traceability methods.

Therefore, it is desired to create a concept for the tracking of an object, which makes a better compromise between costs, speed, reliability and robustness against alterations of the object.

Summary of the invention

This is achieved by the subject matter of the independent claims of the present application.

Further embodiments according to the invention are defined by the subject matter of the dependent claims of the present application.

In the following, different inventive embodiments and aspects will be described in this section, and also in the rest of this description (for example in chapters 2 and 3). However, the features, functionalities and details described in any other chapters or sections can also, optionally, be introduced into the embodiments according to the present invention.

Also, further embodiments will be defined by the enclosed claims. It should be noted that any embodiments as defined by the claims can optionally be supplemented by any of the details (features and functionalities) described in this section and also by any of the details described in any other chapters or sections.

Also, the embodiments described in the abovementioned chapters can be used individually, and can also be supplemented by any of the features in the summary of the invention, or by any feature included in the claims.

Also, it should be noted that individual aspects described herein can be used individually or in combination. Thus, details can be added to each of said individual aspects without adding details to another one of said aspects.

It should also be noted that the present disclosure describes, explicitly or implicitly, features usable in an object identifier. Thus, any of the features described herein can be used in the context of an object identifier.

Moreover, features and functionalities disclosed herein relating to a method can also be used in an apparatus (configured to perform such functionality). Furthermore, any features and functionalities disclosed herein with respect to an apparatus can also be used in a corresponding method. In other words, the methods disclosed herein can be supplemented by any of the features and functionalities described with respect to the apparatuses.

Also, any of the features and functionalities described herein can be implemented in hardware or in software, or using a combination of hardware and software, as will be described in the section "implementation alternatives".

An embodiment according to this invention is related to an apparatus for obtaining a hash value associated with an object, e.g. for a later identification of the object. The apparatus is configured to apply a multi-dimensional, e.g. two-dimensional, transform, such as a 2-dimensional discrete Fourier transform, to an image, e.g. a 2-dimensional image of the object or of a surface of the object, in order to obtain a multi-dimensional, e.g. 2-dimensional, array of transform coefficients. The coefficients may for example be DCT (discrete cosine transformation) coefficients $X_{0,0}$ to $X_{N1-1,N2-1}$.

Furthermore, the apparatus is configured to obtain the hash value using transform coefficients, e.g. $X_{k_1,k_2}$, for which a first of the transform coefficient indices, e.g. $k_1$, is smaller than a first predetermined value, for example $K_{1,lb}$, e.g. 3, but for which a second of the transform coefficient indices, e.g. $k_2$, is equal to or larger than a second predetermined value, for example $k_{2,lb}$, e.g. 3. The second predetermined value may be identical to or different from the first predetermined value. Therefore, the transform coefficients may for example be associated with a comparatively low spatial frequency, lower than a first spatial frequency threshold, in a first direction and associated with a comparatively high spatial frequency, equal to or higher than a second spatial frequency threshold, in a second direction.

In addition, the apparatus is configured to obtain the hash value using transform coefficients for which the second of the transform coefficient indices is smaller than the second predetermined value but for which the first of the transform coefficient indices is equal to or larger than the first predetermined value. Therefore, the transform coefficients may, for example, be associated with a comparatively low spatial frequency, lower than the second spatial frequency threshold, in the second direction and associated with a comparatively high spatial frequency, equal to or higher than the first spatial frequency threshold, in the first direction.

Furthermore, the apparatus is configured to obtain the hash value while leaving transform coefficients for which the first transform coefficient index is smaller than the first predetermined value and for which the second transform coefficient index is smaller than the second predetermined value, e.g. transform coefficients which are associated with a low spatial frequency both in the first spatial direction and in the second spatial direction, unconsidered in the determination of the hash value.

Further embodiments according to the invention comprise a method for obtaining a hash value associated with an object, e.g. for a later identification of the object, wherein the method comprises applying a multi-dimensional, e.g. two-dimensional, transform, e.g. a 2-dimensional discrete Fourier transform, to an, e.g. 2-dimensional, image of the object or of a surface of the object, in order to obtain a multi-dimensional, e.g. 2-dimensional, array of transform coefficients. The transform coefficients may for example be DCT coefficients $X_{0,0}$ to $X_{N1-1,N2-1}$.

In addition, the method comprises obtaining the hash value using transform coefficients, e.g. $X_{k_1,k_2}$, for which a first of the transform coefficient indices, e.g. $k_1$, is smaller than a first predetermined value, e.g. 3, but for which a second of the transform coefficient indices, e.g. $k_2$, is equal to or larger than a second predetermined value, e.g. 3, which may be identical to or different from the first predetermined value.

Therefore, the transform coefficients may for example be associated with a comparatively low spatial frequency, lower than a first spatial frequency threshold, in a first direction and associated with a comparatively high spatial frequency, equal to or higher than a second spatial frequency threshold, in a second direction.

In addition, the method comprises obtaining the hash value using transform coefficients, for which the second of the transform coefficient indices, e.g. $k_2$ is smaller than the second predetermined value, e.g. 3, but for which the first of the transform coefficient indices, e.g. $k_1$, is equal to or larger than the first predetermined value. Therefore, the transform coefficients may for example be associated with a comparatively low spatial frequency, lower than the second spatial frequency threshold, in the second direction and associated with a comparatively high spatial frequency, equal to or higher than the first spatial frequency threshold, in the first direction.

Furthermore, the method comprises obtaining the hash value, while leaving transform coefficients, for which the first transform coefficient index, e.g. $k_1$, is smaller than the first predetermined value and for which the second transform coefficient index, e.g. $k_2$, is smaller than the second predetermined value, e.g. transform coefficients which are associated with a low spatial frequency both in the first spatial direction and in the second spatial direction, unconsidered in the determination of the hash value.

Embodiments according to the invention are based on the idea, that an object can be characterized with a hash value, wherein the hash value is determined based on coefficients of a multi-dimensional transform that is applied to an image of the object or a surface of the object. Furthermore, in order to obtain the hash value, the idea of embodiments is to use a specific selection of coefficients, wherein selected coefficients are associated with an information about the object or the surface of the object.

Object characterization via hash values may be used in order to minimize the amount of data necessary to identify the object and therefore to reduce required storage size and to amplify processing speed while reducing computational costs. Hashing algorithms according to embodiments of the invention may be based on a perceptual hashing strategy.

Applying the multi-dimensional transform may be used as a first information extraction step, in order to characterize the object or the surface of the object. The multi-dimensional array of transform coefficients, for example being coefficients in the spatial frequency domain, may contain an information about characteristic features of the object or the surface of the object, that can be used to distinguish one object from other objects. Determination of the hash value based on these transform coefficients may be interpreted as a further information extraction, to characterize or identify the object. In order to improve efficiency, only specific coefficients of the array of transform coefficients may be selected in order to calculate the hash value.

Therefore, the first and second predetermined value may be thresholds, separating the coefficient matrix containing the coefficients of the transform, such that coefficients are discarded that do not comprise or comprise only a limited amount of information or disturbed information about the object, for example because of noise, and such that coefficients comprising information or at least a certain amount information about the object are used for the determination of the hash value.

The selection of the transform coefficients is performed, such that transform coefficients for which the first and second transform coefficient index are smaller than the first and respectively second predetermined value are left unconsidered. Thus, transform coefficients which may, for example, be more likely to be affected by unwanted effects such as noise, and/or which may comprise, for example mostly, or to a certain extent, information about the image, e.g. a lighting intensity, that may not be useful, or at least not efficiently usable, in order to obtain the hash value, e.g. in order to distinct one object from another, are discarded. On the other hand, the transform coefficients having transform coefficients which at least match the corresponding predetermined values may be selected, such that a distinct hash value can be obtained on the basis thereof.

As a consequence, a hash value can be obtained, which can be used for a characterization or identification of the object or the surface of the object, for example in order to distinguish the object from others, for example on the basis of Hamming distances. With an inventive apparatus, the characterization information may be reduced to a single hash value, requiring only limited storage space, and thereby still containing enough information in order to identify the object or the surface of the object.

Moreover, by applying the multi-dimensional transform and by reducing the amount of transform coefficients used, in order to calculate the hash value, computational costs may be reduced and/or computational speed amplified, while reducing the amount of storage space needed.

Further embodiments according to the invention comprise an object identifier with an apparatus, according to embodiments, e.g. in this section, of the invention, for obtaining a hash value, and a hash value comparator, which is configured to compare the obtained hash value with one or more reference hash values, e.g. from a hash value database, and to provide an object identification information on the basis of the comparison.

Embodiments according to the invention comprise a method for identifying an object, wherein the method comprises obtaining a hash value, according to embodiments, e.g. in this section, of the invention, and comparing the obtained hash value with one or more reference hash values, e.g. from a hash value database, and providing an object identification information on the basis of the comparison.

By determining a e.g. single hash value in order to characterize an object, the amount of computational expenses in order to compare the value calculated to reference hash values, for example from a database, can be reduced. Furthermore, using hash values, calculated according to embodiments of the invention, may improve accuracy and/or speed of such a database comparison, because of the efficient/advantageous selection of transform coefficients that are used to determine the hash value. Using the specific selection of transform coefficients may, for example, exclude unreliable and/or non-meaningful transform coefficients. On the one hand, coefficients can be selected, that contain, for example, the most characteristic information about the object, while discarding coefficients that are, for example more likely to be, affected by noise or other unwanted effects, such that accuracy may be improved. In addition, the selection of coefficients itself may lead to a reduced number of coefficients taken into account for the calculation of the hash value, improving the speed of such a calculation.

The object identifier, for example enabling fast and precise identification of an object according to embodiments of the invention, may be used, for example, for production processes, wherein it is beneficial to track an object, for example an object undergoing a specific amount of process steps. By tracking, traceability and transparency concerning the production process and quality of the object can for example be ensured.

Embodiments according to the invention provide an apparatus for obtaining a hash value associated with an object, e.g. for a later identification of the object, wherein the apparatus is configured to apply a multi-dimensional, e.g. two-dimensional, transform, e.g. a 2-dimensional discrete Fourier transform, to an, e.g. 2-dimensional, image of the object or of a surface of the object, in order to obtain a multi-dimensional, e.g. 2-dimensional, array of transform coefficients. The transform coefficients may for example be DCT coefficients $X_{0,0}$ to $X_{N1-1,N2-1}$. Furthermore, the apparatus is configured to binarize considered transform coefficients, e.g. a true subset of the transform coefficients, in order to obtain the hash value.

Further embodiments according to the invention comprise a method for obtaining a hash value associated with an object, e.g. for a later identification of the object, wherein the method comprises applying a multi-dimensional, e.g. two-dimensional, transform, e.g. a 2-dimensional discrete Fourier transform, to an image, e.g. 2-dimensional image, of the object or of a surface of the object, in order to obtain a multi-dimensional, e.g. 2-dimensional, array of transform coefficients. The transform coefficients may for example be DCT coefficients $X_{0,0}$ to $X_{N1-1,N2-1}$. Furthermore, the method comprises binarizing considered transform coefficients, e.g. a true subset of the transform coefficients, in order to obtain the hash value.

The transform coefficients considered may characterize the object precisely. Yet, there may be applications wherein it may be advantageous to reduce the amount of data necessary to represent an object, e.g. for database comparisons, wherein the database contains hash values for a large number of objects. Therefore, for example in order to enable an even more efficient identification of an object, binarization of the considered transform coefficients, for example binarization with respect to a mean value of the transform coefficients considered of an object, may enable a significant increase in computational speed and/or may enable a reduction of the amount of data that has to be stored and evaluated for a database comparison.

Further embodiments according to the invention comprise a computer program for performing a method according to embodiments, e.g. in this section, of the invention when the computer program runs on a computer.

In accordance to an aspect of the invention, the apparatus is configured to also use one or more transform coefficients for which the first transform coefficient index is equal to or larger than the first predetermined value and for which the second transform coefficient is equal to or larger than the second predetermined value for the determination of the hash value.

By increasing the amount of transform coefficients considered, characterization of an object or its surface may be performed more accurately. For example in order to identify an object out of a large number of objects, it may be beneficial to generate a characterization of the object, such as a hash value, that characterizes the object precisely, in order to distinguish the object from the other objects, for example via comparison with a database. In addition, in a process chain, alternating the object from process step to process step, considering more transform coefficients may enable tracking of the object in spite of the alternation, for example by machining.

In accordance to an aspect of the invention, the apparatus is configured to obtain a two-dimensional array of transform coefficients $X_{k1,k2}$ on the basis of the image of the object,

wherein $0<=k_1<=k_{1max}$,

wherein $0<=k_2<=k_{2max}$,

wherein the apparatus is configured to obtain the hash value using transform coefficients, e.g. all transform coefficients, which fulfill the condition
$$((k_{1lowbound}<=k_1<=k_{1highbound}) \text{ or } (k_{2lowbound}<=k_2<=k_{2highbound}))$$
while leaving transform coefficients which fulfill the condition
$$((k_1<k_{1lowbound}) \text{ and } (k_2<k_{2lowbound}))$$
and transform coefficients which fulfil the condition
$$k_1>k_{1highbound}$$
and transform coefficients which fulfil the condition
$$k_2>k_{2highbound}$$
unconsidered in the determination of the hash value.

By selecting transform coefficients in between a lower bound ($k_{1lowbound}$, $k_{2lowbound}$ or short $k_{1,lb}$, $k_{2,lb}$) and an upper bound ($k_{1highbound}$, $k_{2highbound}$ or short $k_{1,hb}$, $k_{2,hb}$), transform coefficients may be selected containing, for example the most (or at least a minimum amount) of information about the object or the surface of the object. On the other hand, by discarding transform coefficients below the lower bound or above the upper bound, transform coefficients inclined to being affected by unwanted effects, such as noise, or that do contain other aspects of the image, apart from the object, such as a background, can be left unconsidered, for example in order to improve accuracy of the hash value, evaluated based on the transform coefficients selected. By accuracy of the hash value, its information content and the correctness thereof concerning an object, e.g. to be identified, are meant. In addition, the accuracy of the hash value may also be related to the accuracy of a database comparison in order to identify the object, e.g. by comparing its hash value to a plurality of reference hash values. The more accurate the hash value is, or in other words the more information about specific characteristics of the object it inherits and the less disturbances or faulty information is incorporated, the better such a comparison may be, or the higher the probability to recognize or identify the object may be. Furthermore, by reducing the amount of transform coefficients selected to determine the hash value, computational costs can be reduced and/or computational speed can be improved.

In accordance to an aspect of the invention, the apparatus is configured to obtain the hash value on the basis of transform coefficients in an L-shaped region of a two-dimensional map of transform coefficients, while leaving transform coefficients for which both transform coefficient indices are smaller than respective predetermined values unconsidered in the determination of the hash value.

Selecting an L-shaped region of a two-dimensional map of transform coefficients, e.g. of an array of transform coefficients, enables the before mentioned selection of coefficients according to the amount information about the object they contain and/or the amount of disturbances they may be affected with. By that, computational efficiency can be improved, for example together with the accuracy of the hash value determined based on coefficients of the L-shaped region.

In accordance to an aspect of the invention, the apparatus is configured to obtain the transform coefficients, e.g. $X_{k1,k2}$, using a 2-dimensional discrete cosine transform of an image of the object. The transform coefficients may be a coefficient matrix representing some or all frequency component in the image of the object.

The discrete cosine transform is a standard transformation, well understood and widely available for many applications. Therefore, processing speed may be further enhanced by using such transform. In addition, results from the cosine transform may enable more insight about information of the image, for example by analysis of the spatial frequency components. Furthermore, additional image improvement and/or noise reduction methods may be applied in any intermediate step, according to embodiments of the invention.

Furthermore, it has been found that the above described selection of transform coefficients out of the plurality of transform coefficients provided by the 2-dimensional discrete cosine transform provides for a good compromise between an amount of data and a suppression of distortions. In addition, the discrete cosine transform may be advantageous because it may provide transform coefficients that can be grouped according to their indices, comprising certain aspects of the image, e.g. information about the scene, such as illumination in a low spatial frequency area and/or image information with high spatial frequencies being more likely to be affected by noise. Thus, a transform coefficient selection may be performed e.g. only taking transform coefficients in a middle frequency area into consideration, enabling an improvement of a hash value determination, e.g. in order to characterize an object.

In accordance to an aspect of the invention, the apparatus is configured to selectively leave a plurality of transform coefficients, which are associated with spatial frequencies in an environment of a zero spatial frequency, e.g. with transform coefficient indices $k_1=0$, $k_2=0$, unconsidered for the determination of the hash value.

It has been found that low spatial frequencies may imply, for example mainly, information about the scene, e.g. the background, captured, that may not be or may only be in a limited scope useful for a determination of the hash value, for example in order to characterize the object in the image. As an example, it has been recognized that low spatial frequencies may contain information about illumination or macroscopic features, which may not be useful to distinguish an object from other objects, since the illumination may change even in an industrial environment without natural light and because the objects may be mass-produced products, whose macroscopic features may all be the same, such that they can only be distinguished by minor, for example stochastic, features.

In accordance to an aspect of the invention, the apparatus is configured to selectively leave a plurality of transform coefficients in a maximum spatial frequency region unconsidered for the determination of the hash values.

It has been found that noise may affect high frequencies of image information more than lower frequencies. This fact may be used in order to leave transform coefficients above a maximum spatial frequency region unconsidered for the determination of hash values. In that way coefficients that may be affected by noise more strongly than others can be discarded in order to improve the accuracy of the hash value.

In accordance to an aspect of the invention, the apparatus is configured to selectively leave a plurality of transform coefficients having a spatial frequency in a first direction which is larger than a first maximum spatial frequency threshold and/or having a spatial frequency in a second direction which is larger than a second maximum spatial frequency threshold unconsidered for the determination of the hash values.

Distinguishing between the first and the second direction concerning maximum frequency thresholds may enable even further improvements of the accuracy of the hash value determined based on the transform coefficients. In some applications, it may be beneficial to set individual thresholds for each image direction.

In accordance to an aspect of the invention, the apparatus is configured to selectively use a plurality of transform coefficients which lie, e.g. in terms of associated spectral frequencies, between a group of transform coefficients, which are associated with spatial frequencies in an environment of a zero spatial frequency, and a group of transform coefficients in a maximum spatial frequency region for the determination of the hash value, such that, for example, only a plurality of transform coefficients which are associated with at least one middle spatial frequency - which lies between a minimum spatial frequency and a maximum spatial frequency - are used for the determination of the hash values.

By using the plurality of transform coefficients which are associated with at least one middle spatial frequency, a bandpass characteristic, for example by filtering out coefficients associated with low frequencies containing information that is not or only to a certain extend related to the object, such as illumination or macroscopic features, and by filtering out coefficients associated with high frequencies that are inclined to be affected by noise, can be achieved. Therefore, an improved characterization of the object by the hash value may be possible, and additional filtering steps, for example for improving the extraction of image information may be skipped, resulting in lower computational costs and higher efficiency.

In accordance to an aspect of the invention, the apparatus is configured to reduce an image resolution before deriving the transform coefficients.

Reduction of the image resolution may be used in order to reduce the storage space required and to improve processing speed. For example by the selection of transform coefficients associated with middle frequencies containing for example a majority of the information about the object in the image according to the invention, a reduction of the image resolution is possible, for example without endangering accuracy of the hash value, for example in order to identify the object. The loss of information by the reduction of the resolution may be compensated by the inventive selection of the transform coefficients according to the invention. In that way embodiments according to the invention may enable fast characterization and/or identification of an object. In addition, the handling of large databases for applications wherein many objects need to be compared to each other are possible, because of the reduced computational costs and reduced required storage space.

In accordance to an aspect of the invention, the apparatus is configured to determine the transform coefficients $X_{k1,k2}$ according to

$$X_{k_1,k_2} = \sum_{n_1=0}^{N_1-1} \sum_{n_2=0}^{N_2-1} x_{n_1,n_2} \cos\left[\frac{\pi}{N_1}\left(n_1 + \frac{1}{2}\right)k_1\right] \cos\left[\frac{\pi}{N_2}\left(n_2 + \frac{1}{2}\right)k_2\right]$$

wherein $X_{n1,n2}$ designate pixels of the image of the object, $N_1$ is a dimension, e.g. a number of pixels, of the image in a first direction, $N_2$ is a dimension, e.g. a number of pixels, of the image in a second direction, $n_1$ and $n_2$ are running variables, $k_1$ is a first transform coefficient index, and wherein $k_2$ is a second transform coefficient index.

The formula given above may enable a fast calculation of the transform coefficients $X_{k_1,k_2}$. This kind of calculation may be implemented efficiently on hardware, such as a microcontroller or an ASIC.

In accordance to an aspect of the invention, the apparatus is configured to binarize the transform coefficients, in order to obtain the hash value.

By binarizing the transform coefficients, for example the transform coefficients selected, a further reduction of the storage space required can be achieved. In addition, a comparison with the database may be performed faster. Furthermore, the hash value itself may be a combination of the binarized transform coefficients.

In accordance to an aspect of the invention, the apparatus is configured to determine an average value of the considered transform coefficients, and wherein the apparatus is configured to compare the considered hash values or the considered transform coefficients to the average value, in order to obtain corresponding hash values, e.g. one hash value per considered transform coefficient, in dependence on a result of the comparison, wherein, for example, the respective hash value is zero if the corresponding transform coefficient is smaller than the average value, and one if the corresponding transform coefficient is larger than the average value, or vice versa. If the transform coefficient is equal to the average value, the respective hash value may, for example, be set to zero or to one, depending on the implementation.

By binarizing the transform coefficients with respect to an average value of the transform coefficients, an adaptive binarization can be achieved. In that way, differences between images of different objects that are not related to the objects themselves, for example caused by external influences, may be excluded from the determination of the hash value, because of the adaptive threshold in the form of the average value. Such an external influence may impact for example all or many or most of the transform coefficients selected, such that a binarization with a fixed threshold may lead to a distorted hash value. Therefore, with a binarization according to the invention, an identification of an object by its hash value, for example by comparing it to hash values of a database with a plurality of hash values of objects may be improved, for example with respect to distortions affecting the majority of the transform coefficients and/or the transform coefficients selected.

In accordance to an aspect of the invention the value comparator of the object identifier is configured to determine one or more hamming distances, e.g. normalized hamming distances, between the obtained hash value and one or more reference hash values, in order to perform the comparison, wherein, for example, the binarized hash values are considered as binary strings.

Hamming distances may be calculated efficiently, improving computational speed. In addition, object identification via a database, based on Hamming distances may enable the handling of large numbers of objects, for example because of their simplicity, low required storage space and/or low computational costs for the determination of the hamming distances.

In accordance to an aspect of the invention the apparatus is configured to determine an average value of the considered transform coefficients, and the apparatus is configured to compare the considered hash values to the average value, in order to obtain corresponding hash values, e.g. one hash value per considered transform coefficient, in dependence on a result of the comparison, wherein, for example, the respective hash value is zero if the corresponding transform coefficient is smaller than the average value, and one if the corresponding transform coefficient is larger than the average value, or vice versa.

As mentioned above, an adaptive binarization may improve accuracy of the hash values, for example in order to identify an object by comparing its hash value, e.g. by calculating Hamming distances, to reference hash values of a database.

In accordance to an aspect of the invention, the apparatus for obtaining a hash value associated with an object is configured to obtain the hash value using transform coefficients for which a first of the transform coefficient indices, e.g. $k_1$, is smaller than a first predetermined value, e.g. 3 but for which a second of the transform coefficient indices, e.g. $k_2$ is equal to or larger than a second predetermined value, e.g. 3, which may for example be identical to or different from the first predetermined value.

Furthermore, the apparatus is configured to obtain the hash value using transform coefficients for which the second of the transform coefficient indices, e.g. $k_2$, is smaller than the second predetermined value, e.g. 3, but for which the first of the transform coefficient indices, e.g. $k_1$ is equal to or larger than the first predetermined value, while leaving transform coefficients for which the first transform coefficient index, e.g. $k_1$, is smaller than the first predetermined value and for which the second transform coefficient, e.g. $k_2$, is smaller than the second predetermined value unconsidered in the determination of the hash value.

The selection of transform coefficients to be considered for the determination of the hash value may improve accuracy of the hash value and reduce computational costs, because of the reduced number of coefficients.

Brief Description of the Drawings

The drawings are not necessarily to scale, emphasis instead generally being placed upon illustrating the principles of the invention. In the following description, various embodiments of the invention are described with reference to the following drawings, in which:

Fig. 1    shows a block diagram of an apparatus for obtaining a hash value associated with an object according to an embodiment of the present invention;

Fig. 2    shows a block diagram of an apparatus for obtaining a hash value according to an embodiment of the present invention with additional features;

Fig. 3a    shows an object identifier according to an embodiment of the present invention;

Fig. 3b    shows an apparatus for obtaining a hash value associated with an object according to an embodiment of the invention;

Fig. 4    shows a method for obtaining a hash value associated with an object, according to an embodiment of the present invention;

Fig. 5    shows a method for obtaining a hash value associated with an object based on a binarization according to an embodiment of the present invention;

Fig. 6    shows a schematic example of a first array of transform coefficients which may be obtained in an embodiment of the present invention;

Fig. 7    shows a schematic example of a second array of transform coefficients which may be obtained in an embodiment of the present invention;

Fig. 8    shows an example of a MID production chain, for which embodiments according to the present invention may be used;

Fig. 9  shows an example of an acquisition unit that may be used with embodiments according to the present invention;

Fig. 10  shows an example of an extraction of a region of interest (ROI) for hash value calculation according to an embodiment of the present invention;

Fig. 11  shows an example of a hash algorithm for surface pattern recognition according to an embodiment of the present invention;

Fig. 12  shows a flowchart describing an example of a process from image capturing to part identification and an example for the determination of the normalized hamming distance of two binary strings, according to embodiments of the present invention;

Fig. 13  shows an example of identification results of MID parts based on an algorithm according to an embodiment of the present invention; and

Fig. 14  shows exemplary images of a dataset according to an embodiment of the present invention.

Detailed Description of the Embodiments

Equal or equivalent elements or elements with equal or equivalent functionality are denoted in the following description by equal or equivalent reference numerals even if occurring in different figures.

In the following description, a plurality of details is set forth to provide a more throughout explanation of embodiments of the present invention. However, it will be apparent to those skilled in the art that embodiments of the present invention may be practiced without these specific details. In other instances, well-known structures and devices are shown in block diagram form rather than in detail in order to avoid obscuring embodiments of the present invention. In addition, features of the different embodiments described herein after may be combined with each other, unless specifically noted otherwise.

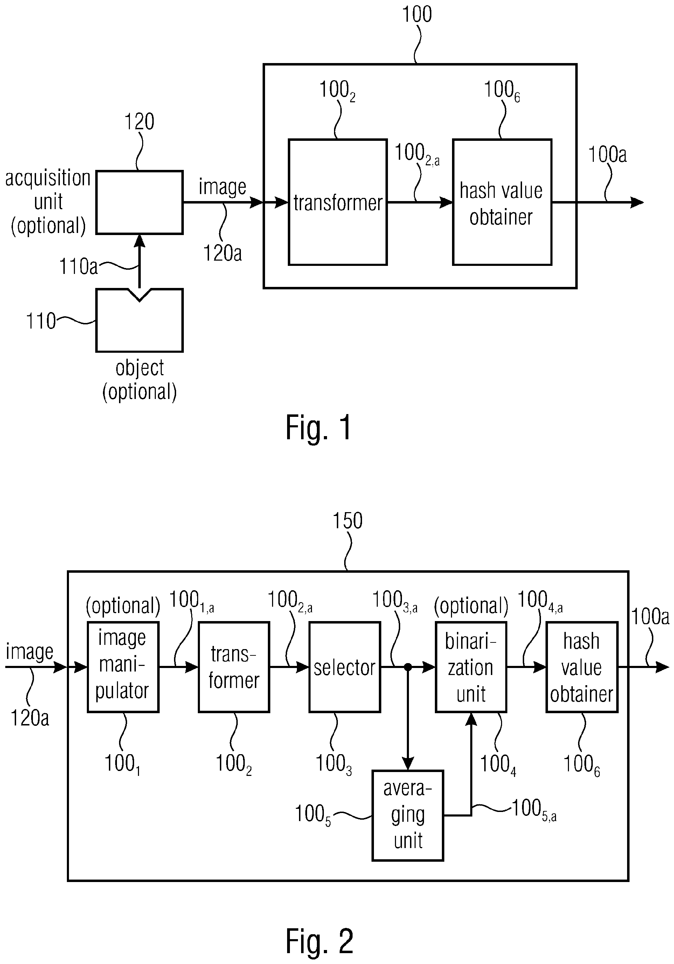

Fig. 1 shows a block diagram of an apparatus 100 for obtaining a hash value 100a associated with an object 110 according to an embodiment of the present invention. Fig. 1 shows the apparatus 100 and optionally, for illustration purposes, the object 110 and an acquisition unit 120. The acquisition unit 120 acquires a sampling information 110a of the object or a surface of the object and provides, based on the sampling information 110a, an image 120a to the apparatus 100. It is to be noted that the acquisition unit 120 is not mandatory for embodiments of the invention. Apparatus 100 may only be provided with the image 120a from any source.

The apparatus 100 comprises a transformer $100_2$, which applies a multi-dimensional transform to the image 120a of the object 110 or of a surface of the object, in order to obtain a multi-dimensional array of transform coefficients $100_{2,a}$. Furthermore, the apparatus comprises a hash value obtainer $100_6$, that obtains the hash value 100a by using transform coefficients for which a first of the transform coefficient indices is smaller than a first predetermined value but for which a second of the transform coefficient indices is equal to or larger than a second predetermined value and by using transform coefficients for which the second of the transform coefficient indices is smaller than the second predetermined value but for which the first of the transform coefficient indices is equal to or larger than the first predetermined value, while leaving transform coefficients for which the first transform coefficient index is smaller than the first predetermined value and for which the second transform coefficient index is smaller than the second predetermined value unconsidered in the determination of the hash value 100a.

By the selection of the transform coefficients to be considered for the calculation of the hash value 100a, computational costs can be reduced because of the reduced number of coefficients and an information about the object contained by the hash value 100a (or a reliability of the hash value 100a)) can be increased, because of the choice of transform coefficients that inherit e.g. the most information about characteristics of the object.

Optionally, the apparatus 100 may be configured to also use one or more transform coefficients for which the first transform coefficient index is equal to or larger than the first predetermined value and for which the second transform coefficient is equal to or larger than the second predetermined value for the determination of the hash value 100a. By using more transform coefficients, a more distinct information about the object, e.g. in order to identify it via a database comparison, may be achievable.

Optionally, the apparatus 100 is configured to obtain a two-dimensional array of transform coefficients $X_{k1,k2}$ on the basis of the image 120a of the object,

wherein $0 <= k_1 <= k_{1max}$,

wherein $0<=k_2<=k_{2max}$,

wherein the apparatus is configured to obtain the hash value 100a using transform coefficients ,e.g. all transform coefficients, which fulfill the condition

$((k_{1lowbound}<=k_1<=k_{1highbound})$ or $(k_{2lowbound}<=k_2<=k_{2highbound}))$
while leaving transform coefficients which fulfill the condition

$((k_1<k_{1lowbound})$ and $(k_2<k_{2lowbound}))$
and transform coefficients which fulfil the condition

$k_1>k_{1highbound}$
and transform coefficients which fulfil the condition

$k_2>k_{2highbound}$
unconsidered in the determination of the hash value 100a. By limiting the transform coefficients considered for the determination of the hash value 100a with an upper bound, coefficients that are for example more likely to affected by unwanted effects, such as noise, may be discarded in order to improve the quality of the hash value 100a, e.g. the quality with respect to inheriting a distinct information about the object, or the possibility and accuracy of an identification via a database comparison.

Optionally, the apparatus 100 may be configured to obtain the hash value 100a on the basis of transform coefficients in an L-shaped region of a two-dimensional map of transform coefficients, while leaving transform coefficients for which both transform coefficient indices are smaller than respective predetermined values unconsidered in the determination of the hash value 100a. The L-shaped region may enable the usage of the beforementioned transform coefficients containing e.g. the most, information about the object. Coefficients outside the L-shaped region may comprise information that is unrelated or only weakly related to the object, or inclined to be affected by unwanted effects, such as noise.

Optionally, the apparatus 100 may be configured to obtain the transform coefficients, e.g. $X_{k1,k2}$; e.g. a coefficient matrix representing some or all frequency component in the image of the object, using a 2-dimensional discrete cosine transform of an image of the object. The discrete cosine transformation enables the extraction of the frequency components with low computational costs. In addition, this method is widely used and therefore available for a plurality of applications.

Optionally, the apparatus 100 may be configured to selectively leave a plurality of transform coefficients, which are associated with spatial frequencies in an environment of a zero spatial frequency, e.g. with transform coefficient indices $k_1=0$, $k_2=0$, unconsidered for the determination of the hash value 100a. These coefficients may for example mainly comprise information about macroscopic features of the object or information about the scenery, such as illumination, that may not be useful for an identification of the object, e.g. in an application where a mass-produced object, e.g. part, is only distinguishable by small deviations, e.g. of the surface, from one another.

Optionally, the apparatus 100 may be configured to selectively leave a plurality of transform coefficients in a maximum spatial frequency region unconsidered for the determination of the hash values 100a. These coefficients may be affected by noise more strongly than coefficients associated with lower frequency regions. Therefore, hash value 100a determination may be improved by discarding such coefficients.

Optionally, the apparatus 100 may be configured to selectively leave a plurality of transform coefficients having a spatial frequency in a first direction which is larger than a first maximum spatial frequency threshold and/or having a spatial frequency in a second direction which is larger than a second maximum spatial frequency threshold unconsidered for the determination of the hash values 100a. Selectively discarding of transform coefficients, e.g. in dependence of the direction, may enable a more sophisticated tuning of hash value 100a determination, that may improve object identification, and that may be performed individually for an application, e.g. according to image acquisition unit and environmental effects.

Optionally, the apparatus 100 may be configured to selectively use a plurality of transform coefficients which lie, e.g. in terms of associated spectral frequencies,

between a group of transform coefficients, which are associated with spatial frequencies in an environment of a zero spatial frequency, and
a group of transform coefficients in a maximum spatial frequency region

for the determination of the hash value 100a, such that, for example, only a plurality of transform coefficients which are associated with at least one middle spatial frequency - which lies between a minimum spatial frequency and a maximum spatial frequency - are used for the determination of the hash values 100a. By implementing such a bandpass characteristic of the transform coefficient selection, additional filter steps may not be necessary and therefore computational costs may be reduced. In addition, transform coefficients in a middle spatial frequency area may contain e.g. the most information about the object, enable the calculation of a hash value 100a with an improved amount of information about the object.

Optionally, the apparatus 100 may be configured to determine the transform coefficients $X_{k1,k2}$ according to

$$X_{k_1,k_2} = \sum_{n_1=0}^{N_1-1} \sum_{n_2=0}^{N_2-1} x_{n_1,n_2} \cos\left[\frac{\pi}{N_1}\left(n_1+\frac{1}{2}\right)k_1\right] \cos\left[\frac{\pi}{N_2}\left(n_2+\frac{1}{2}\right)k_2\right]$$

wherein $X_{n1,n2}$ designate pixels of the image of the object, wherein $N_1$ is a dimension, e.g. a number of pixels, of the image in a first direction, wherein $N_2$ is a dimension, e.g. a number of pixels, of the image in a second direction, wherein $n_1$ and $n_2$ are running variables, wherein $k_1$ is a first transform coefficient index, and wherein $k_2$ is a second transform coefficient index. Calculation according to the beforementioned formula may be implemented with low computational costs, e.g. on an ASIC. Hardware for the computation may therefore be inexpensive and easily available for a plurality of applications.

Fig. 2 shows a block diagram of an apparatus 150 for obtaining a hash value 100a according to an embodiment of the present invention with additional features. Fig. 2 may show a variation of apparatus 100 of fig. 1 with additional features. Corresponding features are designated with equal reference numbers on Figures 1 and 2, and may, for example be equal or comprise equal overall functionalities (while details may be adapted to the respective application)

Apparatus 150 comprises optionally an image manipulator $100_1$, such that apparatus 150 is configured to reduce the resolution of an image 120a received, before deriving transform coefficients. Output of the image manipulator $100_1$ is an image $100_{1,a}$ with reduced resolution. The reduction of resolution may therefore increase computational speed and reduce the bandwidth necessary to transmit the image data.

Furthermore, apparatus 150 comprises a transformer $100_2$ for applying a multi-dimensional transform to the image 120a or the image with reduced resolution $100_{1,a}$ of the object or of a surface of the object in order to obtain the multidimensional array of transform coefficients $100_{2,a}$. The transform may for example be a discrete cosine transformation.

Moreover, apparatus 150 comprises a transform coefficient selector $100_3$. Coefficient selector $100_3$ may be configured to select transform coefficients $100_{3,a}$ from the, for example two-dimensional, array of transform coefficients $100_{2,a}$, according to any of the specifications explained before, e.g. with fig.1.

Optionally, apparatus 150 comprises a binarization unit $100_4$, configured to receive selected transform coefficients $100_{3,a}$ and to binarize the transform coefficients $100_{3,a}$, in order to obtain the hash value 100a. The binarization may reduce the amount of data needed for an object identification, for example enabling databases with a large amount of hash values of objects, that may be compared rapidly with each other for the identification, because of the low amount of binarized data, of each object.

The hash value obtainer $100_6$ receives the binarized transform coefficients and determines the hash value 100a.

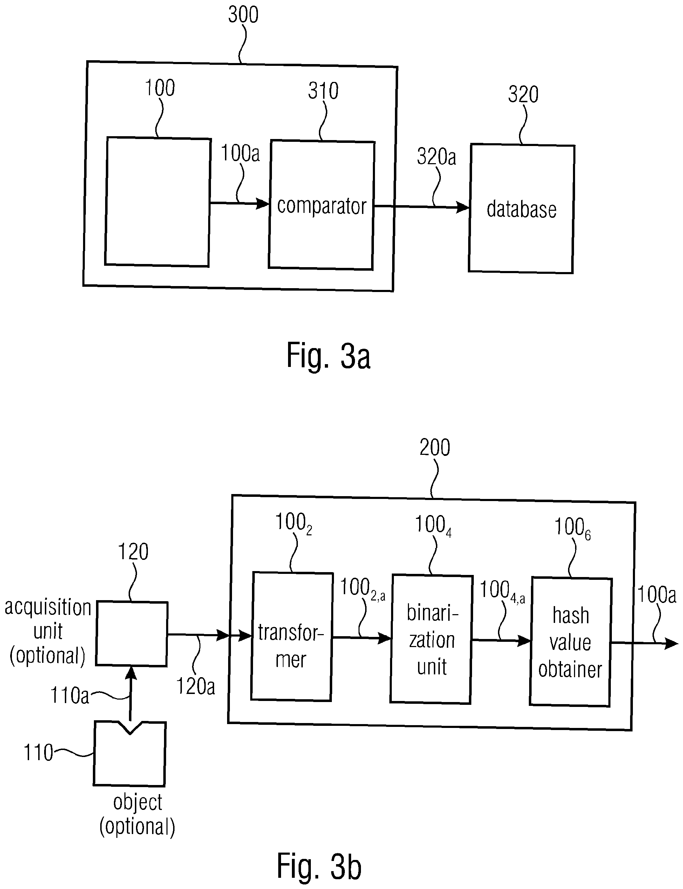

Optionally, apparatus 150 comprises an averaging unit $100_5$, wherein the averaging unit $100_5$ receives the selected transform coefficients $100_{3,a}$ and wherein the averaging unit $100_5$ is configured to determine an average value $100_{5,a}$ of the considered transform coefficients $100_{3,a}$. Furthermore, the apparatus 150 may be configured to compare, e.g. in the binarization unit $100_4$, the considered hash values or transform coefficients $100_{3,a}$ to the average value $100_{5,a}$, in order to obtain corresponding hash values, e.g. one hash value per considered transform coefficient $100_{3,a}$, in dependence on a result of the comparison, wherein, for example, the respective hash value is zero if the corresponding transform coefficient $100_{3,a}$ is smaller than the average value $100_{5,a}$, and one if the corresponding transform coefficient $100_{3,a}$ is larger than the average value $100_{5,a}$, or vice versa. In this case the hash value obtainer $100_6$ and the binarization unit $100_4$ may be one single element. With such an e.g. adaptive binarization according to an individual average value, environmental effects on the transform coefficient between images may be compensated. Fig. 3a shows an object identifier 300 according to an embodiment of the present invention. The object identifier 300 comprises an apparatus 100 for obtaining a hash value, according to any embodiment of the invention, and a hash value comparator 310 configured to compare an obtained hash value 100a with one or more reference hash values 320a from a hash value database 320, and to provide an object identification information on the basis of the comparison. It is to be noted that the database 320 is optional, such that the reference hash value 320a may also be received from another source.

Optionally, the value comparator 310 is configured to determine one or more hamming distances, e.g. normalized hamming distances, between the obtained hash value and one or more reference hash values, in order to perform the comparison, wherein, for example, the binarized hash values are considered as binary strings.

Fig. 3b shows an apparatus 200 for obtaining a hash value 100a associated with an object 110, according to an embodiment of the invention. Apparatus 200 may also be used for a hash value comparison, e.g. as shown in Fig. 3a, for example such that apparatus 100 in Fig. 3a may be replaced by apparatus 200. The apparatus 200 receives an image 120a of an object 110 or of a surface of the object, for example from an acquisition unit 120. It is to be noted that the acquisition unit 120 and the object are merely illustrative and by no means necessary for apparatus 200. Apparatus 200 comprises a transformer $100_2$ for applying a multi-dimensional transform to the image 120a of the object or of a surface of the object in order to obtain a multidimensional array of transform coefficients $100_{2,a}$. Furthermore, apparatus 200 comprises a binarization unit $100_4$, configured to receive transform coefficients $100_{2,a}$ and to binarize the transform coefficients $100_{2,a}$, in order to obtain the hash value 110a. Therefore, the apparatus comprises a hash value obtainer $100_6$ that receives the binarized transform coefficients $100_{4,a}$ and obtains the hash value 100a on the basis thereof.

The apparatus 200 may optionally be supplemented by any of the features, functionalities and details disclosed herein, both individually and taken in combination.

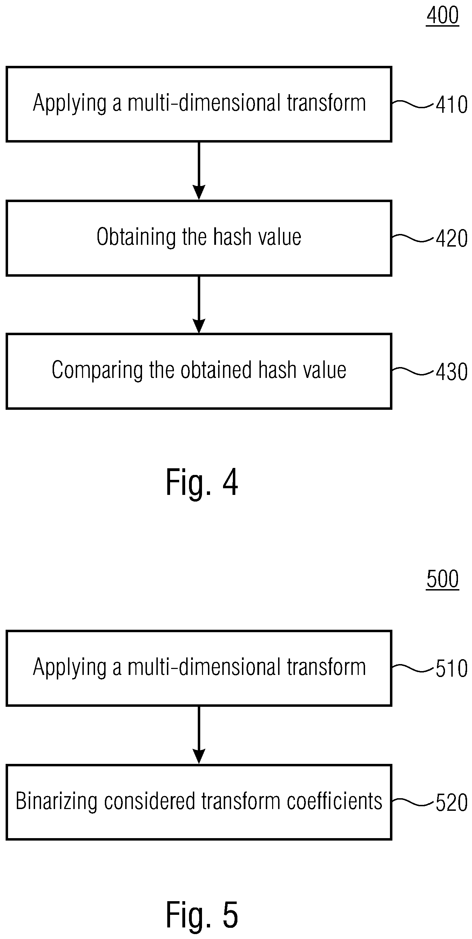

Fig. 4 shows a method 400 for obtaining a hash value associated with an object, according to an embodiment of the present invention, wherein the method comprises applying 410 a multi-dimensional transform, wherein the multi-dimensional transform is applied to an image of the object or of a surface of the object, in order to obtain a multi-dimensional array of transform coefficients. Furthermore, the method comprises obtaining 420 the hash value, wherein obtaining the hash value comprises using transform coefficients for which a first of the transform coefficient indices is smaller than a first predetermined value but for which a second of the transform coefficient indices is equal to or larger than a second predetermined value and using transform coefficients for which the second of the transform coefficient indices is smaller than the second predetermined value but for which the first of the transform coefficient indices is equal to or larger than the first predetermined value, while leaving transform coefficients for which the first transform coefficient index is smaller than the first predetermined value and for which the second transform coefficient index is smaller than the second predetermined value unconsidered in the determination of the hash value.

The method of Fig. 4 can optionally be supplemented by any of the features, functionalities and details disclosed herein, also with respect to the corresponding apparatuses. The method can be supplemented by said features, functionalities and details both individually and taken in combination.

Optionally, method 400 comprises comparing 430 the obtained hash value in order to identify the object, wherein the comparison comprises comparing the obtained hash value with one or more reference hash values, and providing an object identification information on the basis of the comparison.

Fig. 5 shows a method 500 for obtaining a hash value associated with an object, e.g. for a later identification of the object, based on a binarization according to an embodiment of the present invention. The method 500 comprises applying 510 a multi-dimensional, e.g. two-dimensional, transform, e.g. a 2-dimensional discrete Fourier transform, to an image, e.g. 2-dimensional image, of the object or of a surface of the object, in order to obtain a multi-dimensional, e.g. 2-dimensional, array of transform coefficients, e.g. DCT coefficients $X_{0,0}$ to $X_{N1-1,N2-1}$. Furthermore, the method 500 comprises binarizing 520 considered transform coefficients, e.g. a true subset of the transform coefficients, in order to obtain the hash value. The binarization may be performed by a binarization unit $100_4$, e.g. according to Fig. 2 and/or Fig. 3b.

The method of Fig. 5 can optionally be supplemented by any of the features, functionalities and details disclosed herein, also with respect to the corresponding apparatuses. The method can be supplemented by said features, functionalities and details both individually and taken in combination

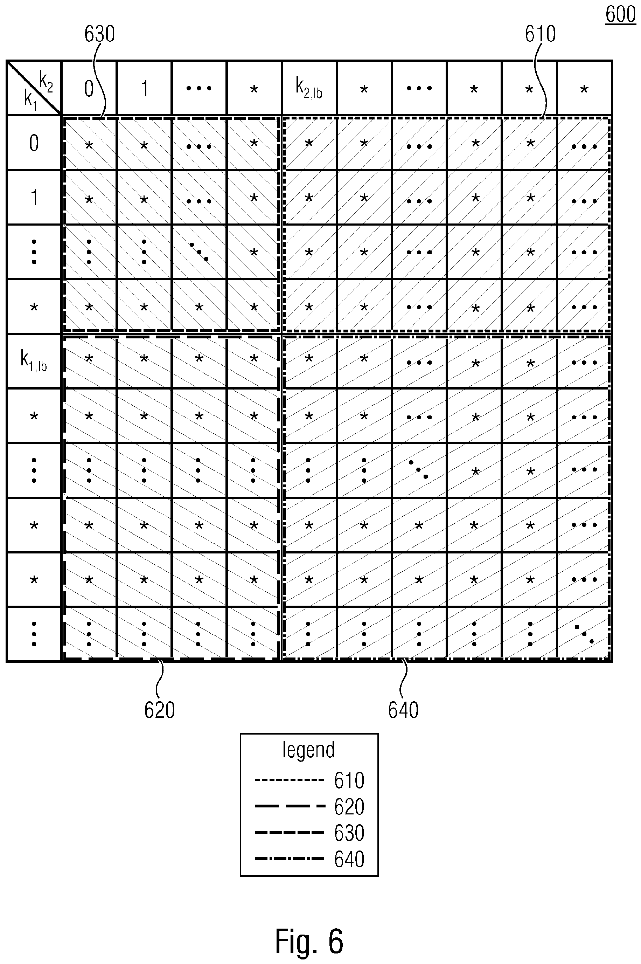

Fig. 6 shows a schematic example of a first array of transform coefficients which may be obtained in an embodiment of the present invention. Fig. 6 shows an array 600 of the transform coefficients with indices $k_1$ and $k_2$. The transform coefficients may represent a spatial frequency, e.g. of a Fourier transformation or another spatial transformation, in a first and second direction. The transform coefficients shown in Fig. 6 may, for example, represent the coefficients $100_{2,a}$ in Figures 1, 2, and 3b, that are provided by the transformer $100_2$. The transform coefficients may comprise an information extracted by the transformer $100_2$ from the image 120a, e.g. from Figures 1 or 3b. A first predetermined value $k_{1,lb}$ and a second predetermined value $k_{2,lb}$ is shown. The "*" represents an arbitrary value either for the index of the coefficient or its value. Fig. 6 visualizes areas of the array 600 of the transform coefficients that may be considered for the determination of the hash value.

According to embodiments, e.g. in this section, of the invention, transform coefficients for which the first of the transform coefficient indices $k_1$ is smaller than the first predetermined value $k_{1,lb}$ but for which a second of the transform coefficient indices $k_2$ is equal to or larger than a second predetermined value $k_{2,lb}$ are used for the determination of the hash value. This area of considered transform coefficients is visualized with border line 610.

Furthermore, transform coefficients for which the second of the transform coefficient indices $k_2$ is smaller than the second predetermined value $k_{2,lb}$ but for which the first of the transform coefficient indices $k_1$ is equal to or larger than the first predetermined value $k_{1,lb}$. This area of considered transform coefficients is visualized with border line 620.

Moreover, transform coefficients for which the first transform coefficient index $k_1$ is smaller than the first predetermined value $k_{1,lb}$ and for which the second transform coefficient index $k_2$ is smaller than the second predetermined value $k_{2,lb}$ is left unconsidered for the determination of the hash value. This area of unconsidered transform coefficients is visualized with border line 630.

Optionally, one or more transform coefficients for which the first transform coefficient index $k_1$ is equal to or larger than the first predetermined value $k_{1,lb}$ and for which the second transform coefficient $k_2$ is equal to or larger than the second predetermined value $k_{2,lb}$ may be considered for the determination of the hash value. This area of transform coefficients is visualized with border line 640.

The areas (or regions in the transform domain) of transform coefficients considered, e.g. with border lines, 610, 620 ,640 may comprise (or correspond to) the transform coefficients used by hash value obtainer $100_6$ of Fig. 1 and/or the transform coefficients $100_{3,a}$ selected by selector $100_3$ in Fig. 2, that may be provided to a binarization unit, e.g. binarization unit $100_4$.

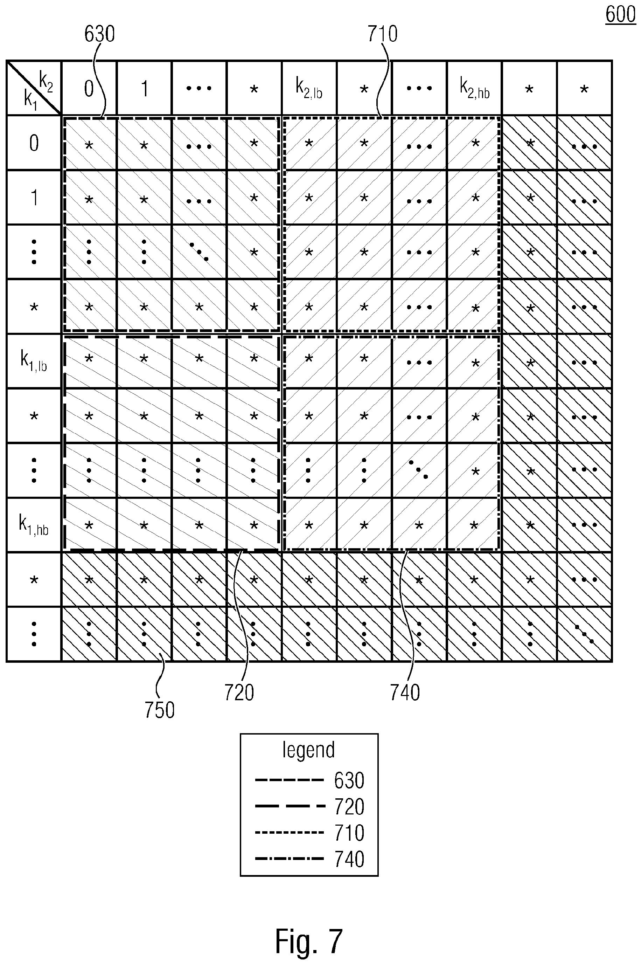

Fig. 7 shows a schematic example of a second array of transform coefficients which may be obtained in an embodiment of the present invention. Fig. 7 shows the same array of transform coefficients as fig. 6, but with optional adaptions of the areas of considered and unconsidered transform coefficients, for the determination of the hash value. In addition to fig. 6, additional, optional predetermined values $k_{1,hb}$ and $k_{2,hb}$ for the transform coefficients indices $k_1$ and $k_2$ are shown. According to embodiments, the apparatus is optionally configured to obtain the hash value using transform coefficients which may fulfill the non-optional conditions discussed in fig. 6 together with ($k_{1,lb}<=k_1<=k_{1,hb}$), visualized by border line 720, or together with ($k_{2,lb}<=k_2<=k_{2,hb}$), visualized by border line 710. Furthermore, transform coefficients which fulfill the condition $k_1>k_{1,hb}$ and $k_2>k_{2,hb}$ may be left unconsidered in the determination of the hash value, visualized by border line 740, being a alternation of border line 640 from fig. 6, with respect to the beforementioned condition of the transform indices surpassing higher bounds. Border lines 710, 720 and 740 of optionally considered transform coefficients form a L-shaped region of the two-dimensional map or array of transform coefficients.

In the case of the transform coefficients being a result of a Fourier transformation, transform coefficients visualized with border line 630 in figures 6 and 7, may represent transform coefficients, which are associated with a spatial frequency environment of a zero spatial frequency and/or low frequencies. These transform coefficients may not or may only to a limited extent contain information about the object or a surface of the object, for example to be identified, such that it may be beneficial to discard these transform coefficients for the calculation of the hash value.

In the same way, transform coefficients exceeding upper bounds, visualized with area 750, of the transform coefficient indices, $k_1>k_{1,hb}$, $k_2>k_{2,hb}$, may be associated with a maximum spatial frequency region, that may be affected more strongly than other frequency regions by noise, such as image noise, such that it may be also beneficial to discard these transform coefficients for the calculation of the hash value.

In this way transform coefficients which are associated with at least one middle spatial frequency, which lies between a minimum spatial frequency and a maximum spatial frequency, may be used for the determination of the hash values.

In the following, further embodiments are disclosed. Some or even all of these embodiments may be associated with robust and fast part traceability in a production chain exploiting inherent, individual surface patterns. Although some features may be disclosed in this context, it is to be noted that all features of the following embodiments are, individually or in combination, unless otherwise stated, applicable and/or interchangeable with any features of any other embodiments of the invention. In addition, the following explanations concerning part traceability and a production chain are to be seen as just one example, in order to explain the concepts according to the invention.

As already mentioned in the overview, traceability of single parts is essential in automated manufacturing, especially considering recent developments in Industry 4.0 or Smart Manufacturing. In some cases, however, conventional traceability methods, e.g. barcode, DMC or RFID, are not sufficient to track individual components through their entire production chain.

One solution, according to an aspect of the invention, is the exploitation of an object's inherent, individual surface patterns. This disclosure demonstrates, as an example, label-/tag-free traceability of approx. 1000 components in a molded interconnect device (MID) production chain. The parts' surface patterns are, for example, photographed several times along the MID production chain. Based on the captured images nearly 3,300 successful identification processes were performed without any failure in an example implementation. Using a hash algorithm to compress the relevant data of the surface pattern images reduces the required disk space and the runtime significantly. Since the results demonstrate the robustness against surface alterations, this disclosure gives the proof of concept regarding to embodiments of the invention providing a method for fast label-/tag-free part tracking that is applicable in an industrial production line.

In the following not only embodiments according to the invention are proposed, comprising an overall concept for part tracking based on unique, inherent surface patterns that can be found on many objects, but also results and an examination of proposed embodiments and methods in a real production line. According to the results, a proof of concept for embodiments according to the invention is given, for example regarding a system for fast, robust and automatable label-/tag-free traceability of individual parts which is applicable in an industrial production line.

1.2 Scope of embodiments of the invention - aspects of the invention

As mentioned above, individual part tracking in an industrial production line poses high demands. Considering a traceability system based on the FoT, thus, not only demands the reliable identification of unprocessed parts. It requires also the identification's robustness, even if the surface is altered due to the impact of various production processes. Furthermore, the time to capture a surface image as well as performing an identification process must not exceed the production pace and the system should be low-cost and suitable for integration in an automated production line. According to the related work, however, the current state of the art does not provide a traceability system based on the FoT that has been demonstrated to fulfill all the mentioned requirements.

Hence, the scope of embodiments of the invention is the development and the proof of concept of an overall traceability concept addressing some or even all the demands of an industrial part tracking system. Nevertheless, single aspects of the proposed traceability system will need further optimization or modification. The proposed traceability strategy is examined on an exemplary product in a real production line so that the proof of concept regarding a system for fast, reliable, robust and low-cost part tracking system based on the FoT is given. All together more than 3,000 identification processes are performed without any failure.

According to an aspect of the invention, this is achieved, for example, by using an acquisition unit, namely a commercially accessible video measuring system (VMS) to automatically capture surface images of the objects, e.g. test samples. According to an aspect, a self-developed hash algorithm compresses the image data to a fraction of the original data size in order to accelerate the identification process significantly and reduce the database's storage size to a minimum or at least to a reduced amount of storage size. The traceability is examined on approximately 1,000 components performing more than 3,000 identification processes in a real molded interconnect device (MID) production line. Since MID manufacturing comprises various impacts on the parts' surface, e.g. contact with chemicals or high temperature, the identification's robustness is tested properly. The tested MID samples are part of a small series and, thus, neither particularly designed nor particularly manufactured for this examination. Although the examination focuses on the manufacturing of these specific parts, both a proposed identification algorithm according to any embodiment of the invention and the hardware setup are expected to be applicable to other materials and products as well. Indeed, the proposed identification algorithm is successfully tested with other image databases in section 5.2.

In section 2, the disclosure initially describes the examined test samples, the MID production chain and the hardware setup for image capturing. Both the hash algorithm to compress the data size of surface pattern images according to an aspect of the invention and how an identification process is performed based on the generated hash values according to another aspect of the invention are described in section 3. In section 4, the experimental results related to the proof of concept tracking the MID test parts along an entire MID production chain are presented. Section 5 finally discusses the results and other related issues like the applicability to other materials, the metric used or the comparison to other identification algorithms.

## 2. Materials and Methods

### 2.1 Test samples and manufacturing

Test parts are MIDs having an overall dimension below 1 cm x 1 cm x 1 cm. The MID parts are shaped like a tiny box (without top) with parts of the surface electrically functionalized. The cavity surface (not functionalized), i.e. the "box bottom", serves as the identification area that is subsequently named region of interest (ROI). The overall dimension of the ROI is less than 4 mm x 3 mm. The basic body is injection molded out of *LCP Vectra® E840i LDS black* [33] (LCP e.g. Liquid-crystal polymer) using a two-cavity injection mold. The material's suitability to be identified based on individual, inherent surface patterns was demonstrated in earlier work [19].

The test parts are produced in small series. 980 injection molded parts are selected arbitrarily from this production series for examination. Due to rejects during manufacturing, the number of examined parts decreases with each process step. At the end of the process chain, 762 of 980 parts remain and are tracked through the entire production chain. The other parts are sorted out in an intermediate process, unrelated to the tracking presented in this work.

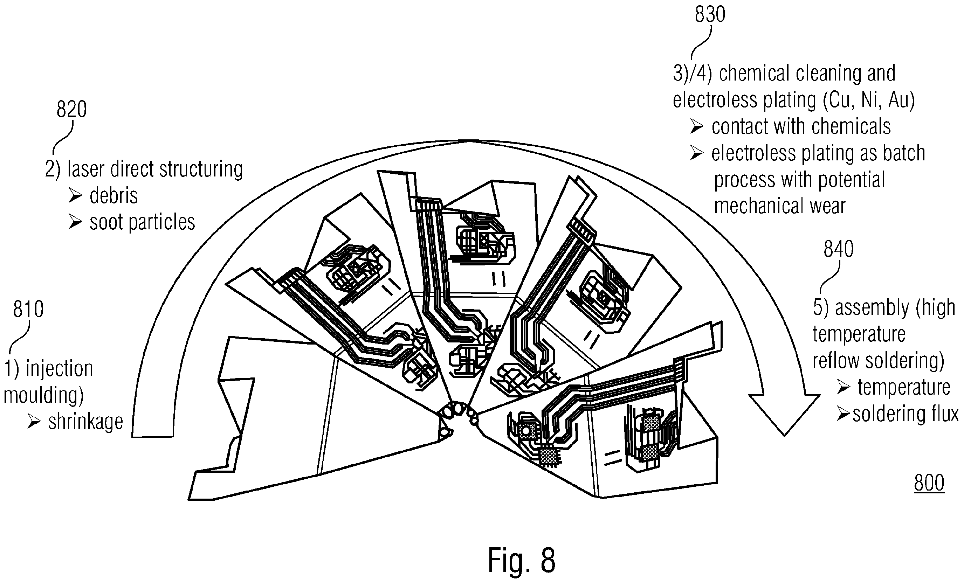

The parts are processed regularly in a MID process chain based on *LPKF-LDS technology* [34]. The process chain is illustrated in figure 8.

Fig. 8 shows an example of a MID production chain, for which embodiments according to the present invention may be used. Fig. 8 illustrates an example of the sequence of manufacturing processes and affiliated impacts on the objects', e.g. parts' surface patterns. Please note that this is an example and may not be the examined but an exemplary MID object, e.g. part. Fig. 8 shows a first process step 810 of the production chain, comprising injection molding (IM) which may lead to shrinkage, for example of object, e.g. the MID. A second process step 820 comprises laser direct structuring (LDS), that may affect the object for example causing debris and/or soot particles, e.g. on the surface of the object. A third and/or fourth process step 830 comprise chemical cleaning and electroless plating (EP, being used in the following for the step of electroless plating that may contain the step of chemical cleaning) (e.g. with Cu, Ni, Au). In this step, the object may be in contact with chemicals, for example altering its surface or the structure of its surface, in addition to the electroless plating, which may be executed as a batch process that may lead to or potentially leads to mechanical wear. A fifth process step 840 comprises an assembly (ASSY), for example with high temperature reflow soldiering. In this step the object may be exposed to temperatures, for example high temperatures, altering its surface and to soldiering flux.

Possible alterations of the parts' surface that can affect the identification certainty are affiliated with each process step in figure 8. It should be noted that shrinkage might affect label-/tag-free identification, however, the shrinkage of the LCP material that was used has no significant impact on the identification certainty [19]. As in the first process step the basic bodies of the MID parts are injection molded using a two-cavity injection mold, the parts are present as bulk material. Individual part tracking is, therefore, usually not applicable before laser direct structuring when not only the conductive tracks are marked but also a unique reference number is added to each part. Before plating, the MID parts are cleaned in a chemical bath. Subsequently, barrel plating in three different chemical baths is used for electroless Cu-/Ni-/Au-plating. Since the parts are plated in a barrel, individual part tracking would not be possible in this step if neither a unique reference number is used nor inherent surface patterns are exploited for identification. At the end of the process chain solder points and SMDs are placed before reflow soldering the parts at about 255°C. Due to the contact with chemicals and temperatures at about 255°C, especially electroless plating and the soldering process, respectively, are assumed to have the most relevant impact on the parts' surface.

2.2 Image capturing and processing according to an aspect of the invention (optional)

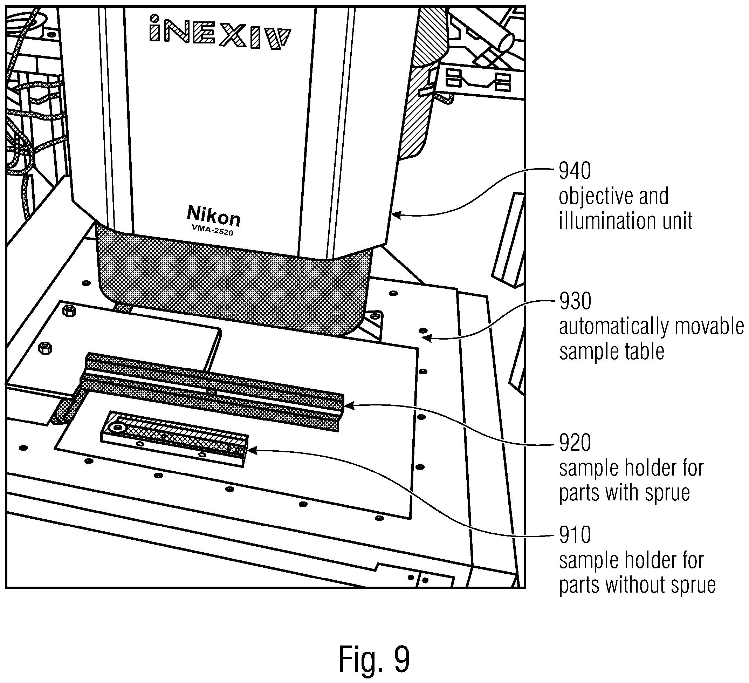

Components are photographed, for example, once after each process step using an acquisition unit, for example, an *iNEXIV VMA-2520* video measuring system, subsequently called VMS. The parts are, for example, placed in a custom sample holder on the system's sample table allowing automatic image capturing of several parts. For example, different sample holders were used as the sprue is removed between laser direct structuring and electroless plating. An image showing the VMS as well as the two sample holders used for image capturing is given in figure 9.

Fig. 9 shows an example of an acquisition unit, in the form of a VMS, that may be used with embodiments according to the present invention. Fig. 9 shows an Image of an example of the VMS used for image capturing and the two sample holders. Fig. 9 shows a sample holder 910 for parts without sprue, a sample holder 920 for parts with sprue, an automatically movable sample table 930 and an objective and illumination unit 940.

The VMS provides, for example, coaxial lighting as well as an eight-segment unitized ring light. Lighting parameters are set to achieve good contrast of the test samples' surface patterns. This was achieved, for example, using all segments of the unitized ring light at approx. 40% intensity level. No coaxial lighting was used. The dimension of captured images is, for example, 640 x 480 pixels due to the hardware of the VMS.

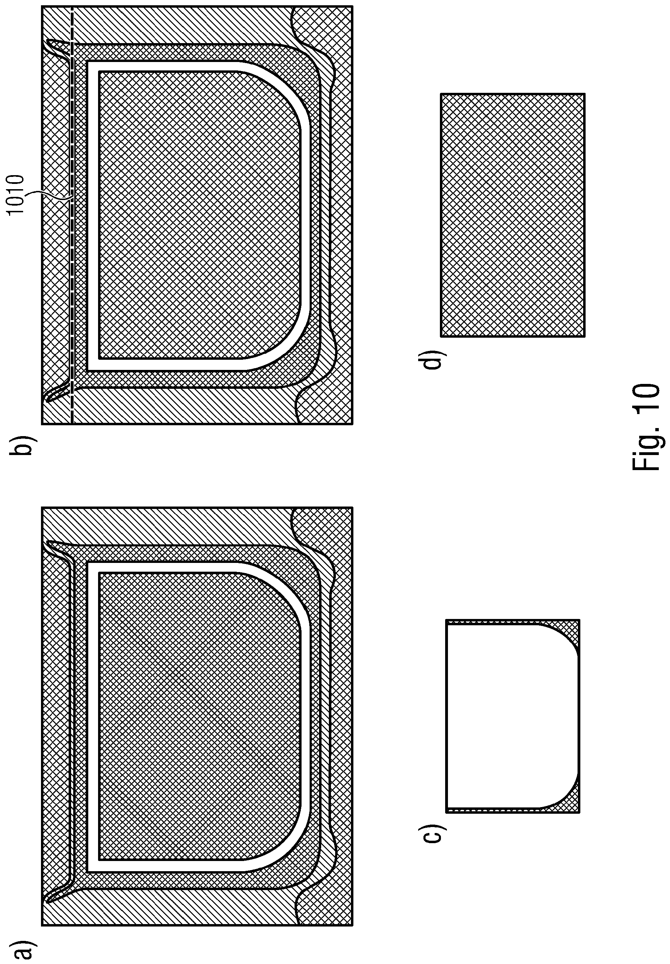

An original image reveals, for example, one part's cavity including its ROI. Based, for example, on edge detection and template matching, the images are rotated and tailored to extract the specific ROI for each part. The ROI was, for example, chosen to exclude the edges of the photographed cavity as this provides good results, or for example even the best results in some cases according to testing different ROI areas. The maximum-sized area that excludes the cavity's edges yields, for example, a final ROI image of 388 x 230 pixels. Image processing to extract the identification area is illustrated, for example, in figure 10.

Fig. 10 shows an example of an extraction of a region of interest (ROI) for hash value calculation according to an embodiment of the present invention. Fig. 10 shows examples of a) an original image; b) a grey-scale image and detected edge (yellow line 1010) used for compensating object, e.g. part rotation; c) a binary template image used to detect the object's, e.g. the part's x-/y-position in the binarized and rotated image; d) a final ROI image.

For example, the a) original image is converted into a b) grey-scale image in which the upper edge (yellow line 1010) is detected to determine the part's orientation. The accordingly rotated image is, for example, binarized so that the position of a part can be detected via a c) template image and a template matching function. Finally, the ROI can, for example, be extracted from the rotated original grey-scale image. For example, each image is compressed to a hash according to the method described in section 3. Image processing has, for example, been implemented in Python based on the OpenCV library [35]. Extracting the ROI of one image takes approx. 120 ms using a 64-Bit- Windows 7 desktop PC consisting of an *Intel Core i5-4590 CPU* with 3.30 GHz, 8 GB RAM and a standard magnetic hard disk. The implementation, however, is not optimized regarding to the runtime at all.

3. Image hashing based on Discrete Cosine Transform according to an embodiment of the invention

According to an embodiment of the invention, the ROI image is compressed using a hash algorithm in order to accelerate the identification process and minimize the required storage size. The present algorithm has been developed following a *Perceptual Hashing* [36] strategy. Perceptual Hashing is usually applied to compress the data of an image to a minimum based on macroscopic features in the image, e.g., allowing to efficiently browse for similar or identical images in a large image database. In contrast, an appropriate hash algorithm for surface pattern recognition should, or sometimes must focus quite exclusively on a part's individual surface pattern features.

A perceptual hash algorithm based, for example, on Discrete Cosine Transform (DCT) [37] was identified to be adjusted for surface pattern recognition. The DCT yields, for example, a coefficient matrix representing all frequency components in an image. However, it has been recognized that only some frequency components imply information about identifiable surface patterns. It has been recognized that low frequencies basically imply information about illumination or macroscopic features, whereas image noise affects high frequencies more strongly. According to an aspect of the invention, only some middle frequencies, therefore, are selected to generate a hash containing the relevant information with respect to individual surface patterns on a part's surface. For example, the hash algorithm proposed in this work comprises successively:

- The image resolution is optionally reduced, e.g., in this work from 388 x 230 pixels to 194 x 115 pixels. This might vary for diverse original image dimensions, but the surface patterns must remain discernible in the downsized image.

- The resulting image is, for example, converted by DCT. An image that has the dimension of $N_1 x N_2$ pixels is, for example, a two-dimensional array of the same size. The pixel values $x_{0,0},...,x_{N_1-1,N_2-1}$ are, for example, transformed into the DCT matrix coefficients $X_{0,0},...,X_{N_1-1,N_2-1}$ as follows:

$$X_{k1,k2} = \sum_{n_1=0}^{N_1-1} \sum_{n_2=0}^{N_2-1} x_{n1,n2} \cos\left[\frac{\pi}{N_1}\left(n_1 + \frac{1}{2}\right)k_1\right] \cos\left[\frac{\pi}{N_2}\left(n_2 + \frac{1}{2}\right)k_2\right]$$

For example, the DCT matrix coefficients $X_{k1,k2}$ represent the contribution of all single frequency components.

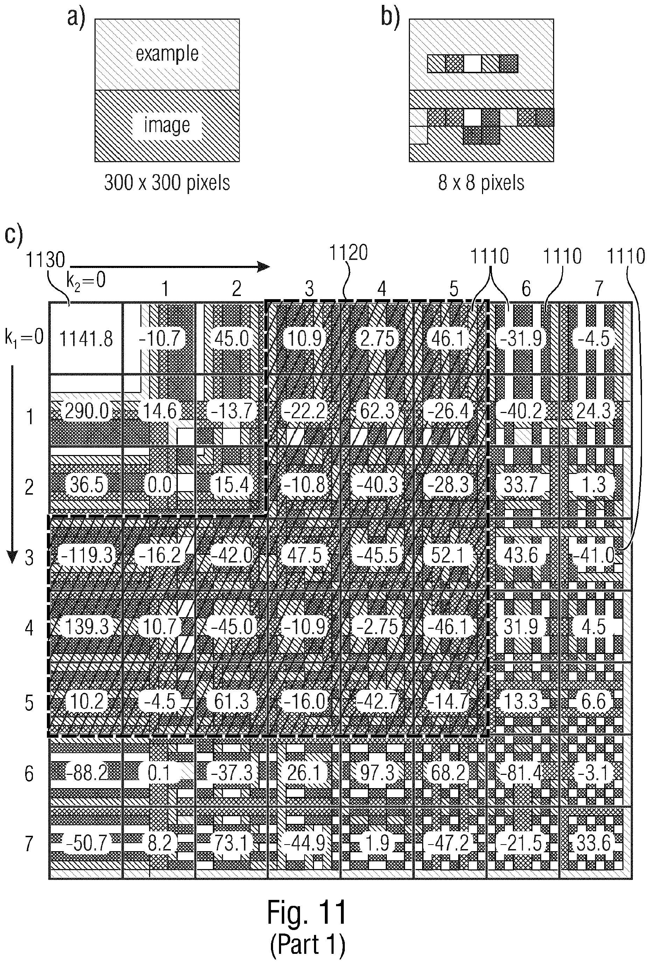

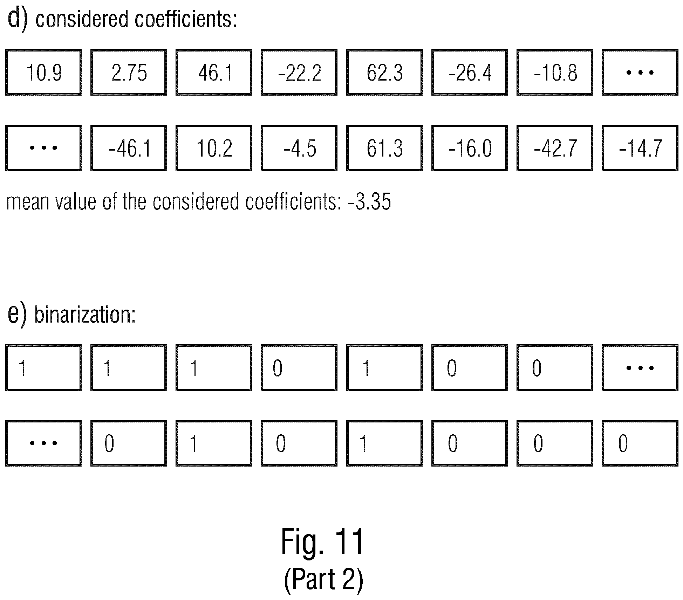

- The DCT matrix is, for example, compressed according to a bandpass. However, the bandpass specifications should (or must) be adapted for any sample/material individually. The basic concept is illustrated, for example, in figure 11 considering an example image that is reduced to 8 x 8 pixels.

Fig. 11 shows an example of a hash algorithm for surface pattern recognition according to an embodiment of the present invention. Fig. shows a) an example image having 300 x 300 pixels. This may, for example, be (or correspond to) image 120a of Figures 1, 2 and/or 3b, comprising an information about an object or a surface of the object; b) the example image being downsized to 8 x 8 pixels, however, examined ROI images may be downsized from 388 x 230 to 194 x 115 pixels. This downsizing may for example be performed by an image manipulator, e.g. image manipulator $100_1$ shown in Fig. 2 with image $100_{1,a}$ being the downsized image with 8x8 pixels as shown in Fig. 11 b). Therefore, for example as shown in Fig. 11, data compression rates with reduction factors over 10 or even over 100 or even over 1000 may optionally be achieved according to embodiments of the invention; c) applying a DCT on figure b) (e.g. on the downsized image of Fig. 11b)) yields the DCT matrix coefficients 1110 (represented, for example, by numbers within the matrix of Fig. 11 c)), for example arranged in each direction with ascending transform coefficient indices $k_1$, $k_2$. The matrix coefficients may, for example, be (or correspond to) the transform coefficients $100_{2,a}$ shown in Figures 1, 2 and/or 3b, that may be provided by the corresponding transformer $100_2$. It is to be noted that usage of the DCT is just an example as other transforms may be used, for example depending on the specific application and for example computation power available. The respective frequency component of each matrix coefficient (or associated with each coefficient) is illustrated in the background. As shown, the square for $k_1$ = $k_2$ = 0 may, for example, be an offset component, e.g. a dc (direct current) component. In each direction of the coefficient matrix (e.g. towards the right and towards the bottom) the corresponding index increases, and spatial base functions of the DCT, for example the spatial cosines, e.g. into which the image is decomposed to, may, for example, be represented in the background of each cell of the matrix. Only a few frequency components (or transform coefficients) are considered to be relevant for surface pattern recognition (red highlighted area with green border line 1120;); Transform coefficients within this area may for example be selected by selector $100_3$ shown in Fig. 2, such that, for example, those (e.g. and only those) transform coefficients which are in the area 1120 are selected (e.g. included into the set of selected transform coefficients $100_{3,a}$). Furthermore, it is shown that transform coefficients in the area 1130 in the top left corner of the matrix, for example associated with low spatial frequencies e.g. $k_1 \leq 2$ and $k_2 \leq 2$, in both image directions, are discarded for the hash value calculation, as these coefficients may comprise e.g. to a certain extent, information that is e.g. not or for example only to a limited extent, useful for the hash value determination, for example information about an illumination of the image that may not be usable for object distinction via hash values; On the other hand, transform coefficients associated with high spatial frequencies, e.g. $k_1 \geq 6$ and/or $k_2 \geq 6$, may also be left unconsidered, e.g. the ones on the right hand side and bottom of the matrix shown, as these coefficients may be affected, or e.g. strongly affected, by noise. d) considered coefficients (e.g. those coefficients which are in the area 1120, e.g. in an ordered form or linearly ordered form), wherein the considered coefficients have a mean value of for example -3.35. This mean value may for example be provided by an averaging unit, e.g. averaging unit $100_5$ from Fig. 2; and e) considered coefficients after binarization. The coefficients after binarization may for example be the transform coefficients $100_{4,a}$ shown in Fig. 2, for example binarized with respect to the mean value.

In this example, the middle frequency components that are considered for generating the hash are $X_{3,3},...,X_{5,5}$. For example, the implementation of the present work considers the matrix coefficients $X_{8,8},...X_{50,78}$ to generate the hash of a ROI image like it is illustrated, for example, in figure 10 d). The bandpass specifications were optimized on a set of 100 exemplary samples to which numerous parameter settings were applied.

- The considered DCT matrix coefficients are optionally binarized, i.e., for example, each value is set to zero or one, for example, dependent on whether the coefficient is below or, respectively, above the average of all considered coefficients.

In this work, for example, the image data are compressed from 88 kB (original image like in figure 10 a) to 0.35 kB (hash). CPU runtime is 7 ms to perform one image-to-hash-conversion based on a 64-Bit-Windows 7 desktop PC consisting of an *Intel Core i5-4590 CPU* with 3.30 GHz, 8 GB RAM and a standard magnetic hard disk.

3.1 Part identification process (example)

All parts are, for example, photographed after each process step in the MID production chain. This yields four image databases comprising images captured after injection molding, laser direct structuring, electroless plating and SMD assembly. These image databases are subsequently named IM, LDS, EP and ASSY, respectively.

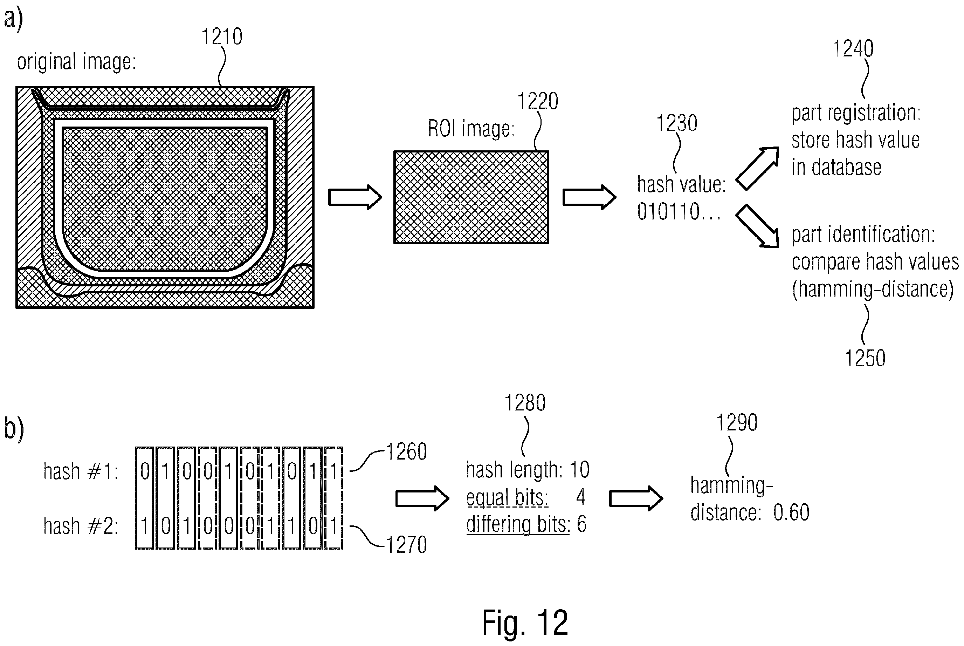

Each captured image is, for example, compressed to a hash value according to section 3. In order to register a part, the respective hash value is, for example, stored in the database. In contrast, a part is, for example, identified via comparing the respective hash value to the hash values of one entire database. This is illustrated, for example, in figure 12 a).

Fig. 12 shows a flowchart describing an example of a process from image capturing to part identification and an example for the determination of the normalized hamming distance of two binary strings, according to embodiments of the present invention. Fig. 12 shows an example of a) Flowchart describing the process from image capturing to part identification, for example starting with an original image 1210, from which a ROI image 1220 is extracted. Based on the ROI image 1220 a hash value 1230 is determined, wherein the hash value can be used for object registration, e.g. part registration 1240, e.g. by storing the hash value in a database and/or for object identification, e.g. part identification 1250, e.g. by comparing the hash values, for example the hash value 1230 determined with reference hash values from a database, for example by calculating hamming distances.

Furthermore, Fig. 12 shows an example of a determination of the normalized hamming distance of two binary strings, for example a first hash value 1260 and a second hash value 1270. In the example of Fig. 12 characteristics 1280 of the hash values 1260, 1270 are a hash length of 10, comprising 4 equal bits and 6 differing bits. The quotient of the number of differing bits and the hash length yields the hamming-distance value 1290 of 0.60.

According to this embodiment of the invention, however, the label-/tag-free traceability of the test samples is examined by identifying each part in the databases LDS, EP or ASSY. The reference database used for an identification process can, for example, be any image database of a previous process step.

According to an aspect of the invention, two image hash values are compared, for example, by determining their hamming-distance. For example, considering the hash values as binary strings of the same length the normalized hamming distance is the quotient of the number of differing bits and the length of the hashes. The hamming distance's calculation is illustrated, for example, in figure 12 b). For example, in this work, hamming distances are distinguished based on their origin. This is particularly useful for discussing the results in section 4. A hamming distance related to the comparison of two different images of the same part is called *intra distance,* whereas a hamming distance based on the comparison of two images of different parts is called *inter distance* [38]. For example, the hamming distance is zero for identical hashes and one for exactly opposite hashes. For example, one part is identified successfully, if one hamming distance is distinctly below the other hamming distances as this hamming distance is assumed to be the part's intra distance.

4. Results

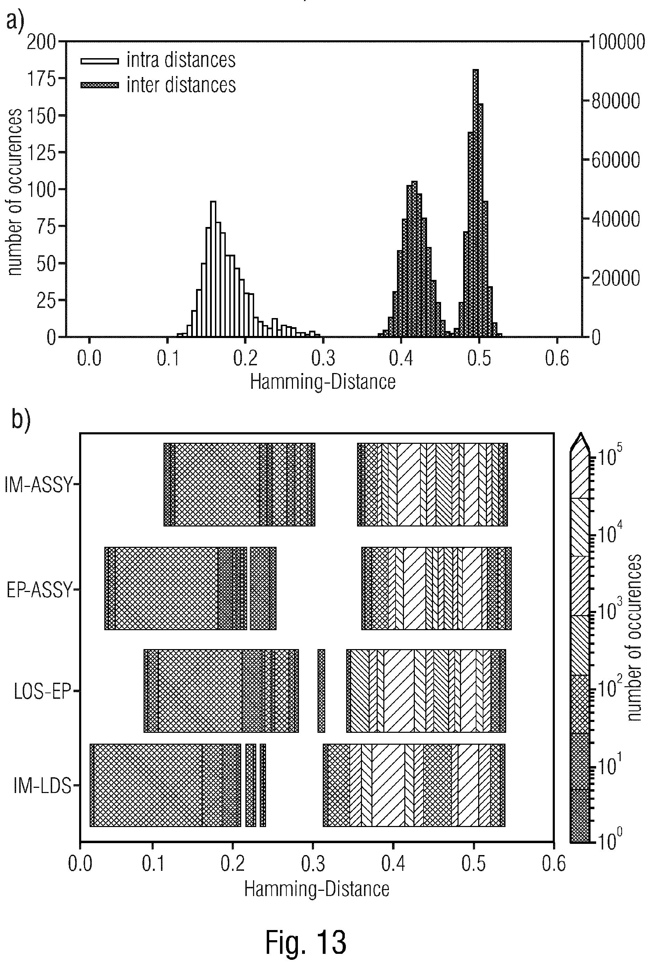

The analysis considers two different application scenarios in an industrial production chain. The experimental results of both application scenarios are illustrated in figure 13.

4.1. Application scenario 1 (example)

In this application scenario the objects, e.g. parts are photographed at the beginning and at the end of the production chain only. The parts, therefore, are identified once in the entire production chain. In this application scenario, the identification is affected by the entire production chain as each process step may have an impact on the parts' surface.

Fig. 13 shows an example of identification results of MID parts based on an algorithm according to an embodiment of the present invention. The number of occurrences is displayed at the ordinate and according Hamming-Distances on the abscissa. Figure 13 shows an example of identification results of MID parts based on the algorithm described in section 3: Fig 13 a) shows a distribution of hamming distances corresponding to application scenario 1. ASSY (e.g. a dataset from the assembly step of the process chain) serves as identification database, IM (e.g. a dataset from the injection molding step of the process chain) serves as reference database. Fig. 13 b) shows color bar based histograms or generally histograms revealing the hamming distance distribution in figure a) (IM - ASSY) as well as the other three distributions according to application scenario 2.

The histogram in figure 13 a) shows, for example, the hamming distance distribution with regard to application scenario 1. In the present case, the IM database comprising 980 parts served as reference database and 762 parts stored in the ASSY database were identified. As the parts don't possess a reference number immediately after injection molding, the correct identification of a part cannot be verified properly. According to the histogram's data in figure 13 a), however, the maximum intra distance is 0.29 and the minimum inter distance is 0.36. This clear gap between the histogram's inter distance distribution and the histogram's intra distance distribution already qualitatively indicates faultless traceability of all parts. The quantitative identification certainty is discussed below.

It should be noted that the two distributions of inter distances are due to the two-cavity injection mold. Hence, the identification of individual mold cavities might also be possible with this approach. According to the histogram data, both distributions comprise each 49.9 % of all inter-distances. The other inter-distances are in the minimum bar between both distributions, which was selected as separation between them.

As the shape, the position as well as the separation of the two inter distance distributions vary for each object identification, e.g. part identification, the effort to calculate the statistical identification certainty of an identification process based on the intra distance, the inter distances mean and the inter distances standard deviation increased dramatically. Nevertheless, a statistical identification certainty is estimated only considering the left inter distance distribution. The left inter distance distribution's mean value is $0.42 \pm 1.5 \cdot 10^{-2}$. Assuming a Gaussian distribution one of 500 million inter distances is statistically outside the range of $6\sigma$, i.e. below 0.33. Due to the two-cavity injection mold, in the present case only one out of 1 billion inter distance values will be below 0.33. Hence, the quantitative analysis demonstrates that faultless traceability can be achieved even for large batch sizes.

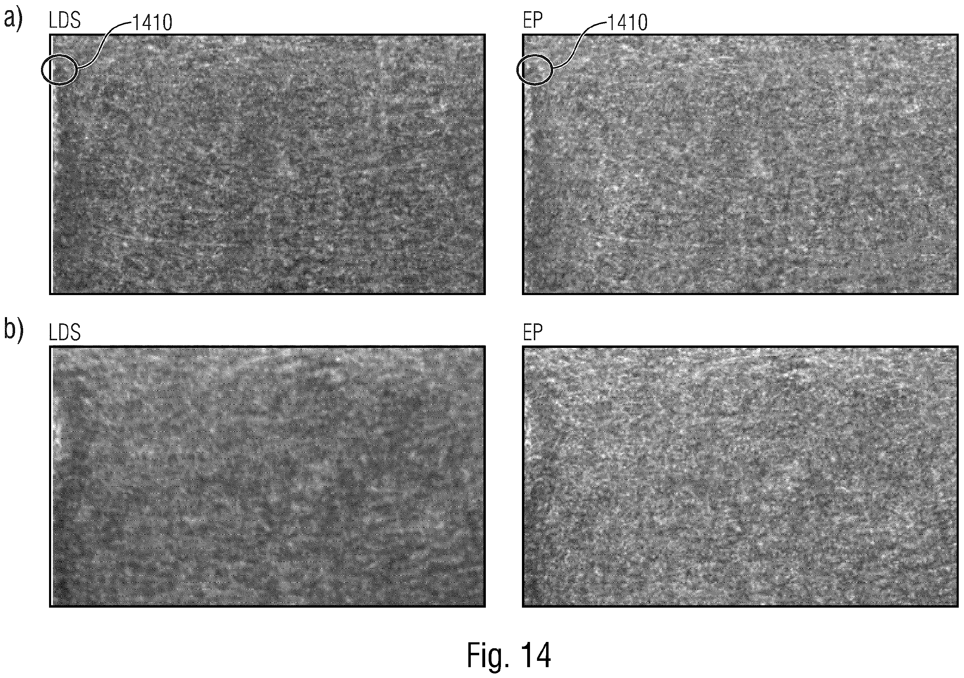

Furthermore, the intra distance distribution is conspicuously non-symmetric as insufficient precision of the ROI extraction increases some intra distances. This is demonstrated in figure 14 showing four exemplary ROI images of two different parts

Fig. 14 shows exemplary images of a dataset according to an embodiment of the present invention. Fig. 14 shows exemplary images of the dataset LDS-EP, with images on the left hand side being from the LDS database and images on the right hand side from the EP database: Fig. 14 shows in a) two different ROI images of one object, e.g. part and in b) two different ROI images of another object, e.g. part. Although the left image in b) is blurred, the intra distance of line b) is higher than of line a). This may be due to inaccurate precision of the ROI extraction. The red circles 1410 in a) emphasize surface patterns to see the shift in the images.

Line a) reveals two different ROI images of one part; line b) reveals two different ROI images of another part. Both left images belong to the LDS database, both right images belong to the EP database. The intra distance related to the top line is 0.28, which is one of the three highest intra distances in the LDS - EP dataset. In contrast, although distinct blurring is observed in the left image of figure 14 b), the intra distance related to the bottom line is 0.15 only. Since the images in line a) appear more similar to the naked eye, however, the intra distance of line a) is expected to be lower than the intra distance of line b). The superposition of the two ROI images in each line, for example using an animated GIF, substantiates the insufficient precision of the ROI extraction as the reason for the high intra distance of line a). In the exemplary images the surface patterns' shift in the two images of line a) can be seen focusing the two bright spots in the circles 1410.

The sensitivity towards rotation and translation of surface patterns captured in two different ROI images was further examined. For this, 40 LCP platelet samples according to [19] were photographed once. Each captured image was rotated or shifted via image processing and, subsequently, was identified by comparing the corresponding hash value of the processed image to the entire database. The diagonal shift of 5 pixels each in x- and in $\gamma$-direction increases the intra distance from 0.00 to 0.34. The rotation of 0.5° increases the intra distance from 0.00 to 0.29. Hence, the proposed algorithm may be very sensitive towards inaccuracies of the surface patterns' positioning in the ROI images.

4.2 Application scenario 2 (example)

In application scenario 2 the parts are photographed, for example, once after each process step. This allows the components to be identified after each process step by comparing the captured surface images before and after the respective process step. In other words, for example, the reference database of an identification process is the image database of the previous process step. In this application scenario each identification is affected by one process step only.

For example, the results regarding to application scenario 2 are illustrated in figure 13 b). However, for the purpose of comparison, in the top line the figure integrates the histogram of figure 13 a) as well. The other three histogram distributions are gained by the identification processes according to application scenario 2. For example, from the bottom line upward, the histograms illustrate the identification after laser direct structuring (LDS), after electroless plating (EP) and after SMD assembly (ASSY). The histogram datasets are named according to the reference and the identification image database separated by a hyphen. As an example, considering the LDS - EP dataset part images of the EP database are identified based on the reference database LDS. Please note the logarithmic scale of the color bar.

In the three respective histograms the shape of the overall hamming distance distributions is similar to the histogram in figure 13 a). According to the results in section 4.1, the clear gap qualitatively indicates faultless traceability of all parts as well. Furthermore, according to the reference number added in the LDS process, the accurate identification of all parts in the EP - ASSY dataset and in the LDS - EP dataset was verified properly. The quantitative identification certainty is discussed below.

One intra distance at about 0.31 in the LDS-EP dataset is conspicuously higher than the others. Based on a closer inspection of the respective part's ROI images in the LDS and EP databases, this is probably due to distinct blurring in the LDS image and/or a clear diagonal shift between both ROI images. Due to the results in section 4.1, in particular the shift between the images is expected to be the reason for the increased intra distance.

For example, in this analysis, the difference between the minimum inter distance $\alpha$ and the intra distance $\beta$ is calculated for each part identification as a quantitative measure of the identification certainty. Every dataset comprises several part identifications so that the experimental results are given in table 1 listing the minimum difference $\min(\alpha - \beta)$ and the mean difference $\alpha - \beta$ related to each dataset. Since all datasets yield similar or higher values like the IM - ASSY dataset, the statistical identification certainty is expected to be similar or higher like in section 4.1. Hence, the results substantiate that accurate part tracking using the proposed algorithm is achievable even in large batch sizes.

Furthermore, comparing the single values in table 1, electroless plating seems to affect the surface patterns more than the other processes. However, part images in the LDS and EP dataset have been captured using two different sample holders. It might be, therefore, that not only the electroless plating process decreases the identification certainty but also the diverse conditions of image capturing. Regardless of the surface pattern changes' origin, robust and fast part identification in spite of surface pattern alternations has been demonstrated successfully.

Table 1: Example of quantitative measure of the identification certainty of all four datasets: $\alpha$ is the minimum inter distance and $\beta$ is the intra distance of a single part. Hence, $\min(\alpha - \beta)$ is the minimum difference and $\alpha - \beta$ is the mean difference regarding to all identification processes of each dataset.

| Dataset | mm($\alpha - \beta$) | $\alpha - \beta$ |
| --- | --- | --- |
| IM - ASSY | 0.09 | 0.21 $\pm$ 0.03 |
| EP - ASSY | 0.14 | 0.29 $\pm$ 0.04 |
| LDS - EP | 0.07 | 0.22 $\pm$ 0.03 |
| IM - LDS | 0.09 | 0.26 $\pm$ 0.04 |

4.3 Runtime

Using the hardware described in section 3, it took 205 ms to identify one part in the IM - ASSY dataset, i.e. comparing one hash to all 980 parts' hashes in the IM database. The runtime increases linearly with the number of components registered in the reference database. Since the implementation is not optimized regarding to the runtime at all, there exists high potential for further improvements, e.g., via reworking the program code with regard to runtime optimization as well as parallelizing several threads.

5. Discussion

5.1 Improving the identification certainty (optional)

The results in section 4 demonstrate successful traceability through the entire MID production chain. In this examination, in total 3,298 identifications were carried out implying the calculation of more than 3 million hash pairs' hamming distances. An exemplary estimation of the statistical identification certainty demonstrates that accurate part identification is expected even for large batch sizes. In other cases, however, when the identification certainty should be improved to achieve faultless part identification, the following should be considered:

- According to the presented results, the precision of the ROI extraction is important, or sometimes essential to achieve accurate part identification. In the case of a non-symmetric intra distance distribution, thus, improving the ROI extraction accuracy should also improve the identification certainty of single parts.

- The camera used in this work has a resolution of 640 x 480 pixels. Using another camera with a higher resolution the captured images contain more information about the surface patterns of an object so that the identification certainty should increase. The runtime for hash generation and part identification, however, probably increase due to larger image and hash sizes, respectively.

- The downsizing of the images' resolution in the hash algorithm might be varied. This has been tested on 100 exemplary parts in the IM - ASSY dataset. As expected, the identification certainty increases with less downsizing of the surface pattern image but the runtime for part identification increases. The best compromise between runtime and identification certainty must be found in each case.

- The illumination setup might be adjusted with respect to the part tracked.

5.2 Applicability to various objects (examples)

Although the algorithm presented in this work is tested via tracking a specific part in the MID production line, the proposed algorithm is expected to be generally applicable to various parts in different applications. Thus, the algorithm's applicability to other parts is herein shortly tested based on the image databases of prior works. Applying the identification method of this work to the surface pattern images of [19], all 100 unprocessed injection molded platelet parts out of *LCP Vectra® E840i LDS black* (mean identification certainty: 70.7) and all 100 unprocessed injection molded platelet parts out of *PPA Vestamid® HTPlus 1031 LDS black* (mean identification certainty: 27.2) were successfully identified. Furthermore, testing the identification algorithm of this work on the pre-processed surface pattern images of [30] 114 of 115 parts processed in the SMD assembly line (mean identification certainty: 27.2) were identified successfully. However, based on a closer inspection of the ROI images, improving the accuracy of the ROI extraction probably yields faultless traceability of all parts. Furthermore, the adjustable parameters in the hash algorithm were selected arbitrarily and can be optimized for each dataset to achieve better results.

5.3 Comparison to other identification strategies based on the FoT (examples)

Table 2 gives a compact overview of different methods that have been proposed for part identification based on the FoT. The table lists information about the

- time that is needed to perform the pre-processing task of captured images/the time that is needed to perform the image to hash value conversion,

- time that is needed to perform the 1 vs. 1 comparison of two pre- processed images/two hash values,

- invariance of the identification method towards rotational or translational positioning inaccuracies in the surface pattern images,

- automation of image capturing that was used in the respective work,

- robustness of the identification method against surface pattern alterations,

- applicability of the identification method to other materials.

Please note that the quantitative comparability of the different numbers is not given properly, e.g., due to different hardware settings or due to the different data size of the surface pattern images.
Nonetheless, the table shows that the two most promising approaches are (1) the recently proposed identification algorithm of Ishyiama et al. and (2) the method proposed in this work. Both works provide fast and accurate part identification. The algorithm of Ishyiama et al. is insensitive to rotational or translational inaccuracies in the captured images, whereas the present algorithm has already been demonstrated to work with various parts and to work even though surface alterations have taken place. Both identification algorithms, however, need further development and examination in order to provide a traceability method that is generally applicable in industrial production lines and with various parts.

Table 2: Comparison of examples of different object identification strategies that are based on unique, inherent surface patterns of the object.

| Work | image to hash | 1 vs. 1 | invariance | automated capturing | robust | various materials |
|---|---|---|---|---|---|---|
| [22] | 12.1 s | n/a | No | No | (Yes)[1] | n/a |
| [15] | n/a | 830 ms | Yes | Yes | n/a | n/a |
| [19] | 2.1 s | 110 ms | No | No | (Yes)[2] | Yes |
| [30] | 0.7 s | >10 ms | No | No | Yes | n/a |
| [29] | n/a | > 1 ms | Yes | Yes | n/a | n/a |
| This work | 0.1 s | > 1 ms | No | Yes | Yes | Yes |

[1] The damage of the parts' surface was simulated on a computer using image processing.

[2] The robustness was not tested in a production environment but the impact of modifying the surface patterns was examined.

5.4 Metrics

All captured images of the test samples have the same resolution so that all hash values created by the images have the same length. Hence, the hamming distance is an appropriate and simple metric to determine the similarity of a hash pair. However, in cases when the hash values might have different lengths, e.g. due to the specifications in an industrial application, other metrics like Levenshtein distance should optionally be considered.

5.5. Storage and data bandwidth requirements (examples)

Beside the runtime that is needed to perform an identification process (see section 4.2), the required storage size is another important or sometimes essential aspect that must be considered with regard to industrial applicability.

In order to provide individual part tracking in an industrial production line, all parts are registered at the beginning of the production chain. Although the surface patterns are captured in an image, the experimental results demonstrate that only the hash value of an image suffices to achieve reliable part identification. Hence, the image of a part can be deleted immediately after creating its hash value. As all parts are registered for the purpose of identification, one hash value of each part is stored in the reference database. In the present case, even considering a batch size of one million parts, the reference database would have only a storage size of 0.35 GB. Due to the required storage size, the reference database can be easily stored on, for example a local server or in a cloud. If a part should be identified, the part is, for example, photographed again and the hash value is created based on the captured image. The part is, for example, identified via comparing the hash value to all hash values stored in the reference database. Since the hash value, for example, has only a few kilobyte data size, there are no special data bandwidth requirements for the identification process. After the identification process, the newly created hash value can, for example, be deleted or replaces the hash value stored in the reference database.

6. Conclusion and final remarks

Faultless traceability based on the Fingerprint of Things has been demonstrated on almost 1,000 test samples tracking a standard, miniaturized MID product in a real MID production line. All together 3,298 identification processes were performed successfully without any incorrect identifications, although the samples' surfaces were modified between the two photographs that serve for enrollment and identification of a part. Hence, identification has been demonstrated to be robust against minor changes of the revealed surface patterns, e.g., due to image blurring or surface pattern alternations based on MID manufacturing processes. In this context, it should be noted that the MID production line implies several impacts on the parts' surfaces such as debris, contact with chemicals or high temperature. Referring to the statistical analysis in section 4.1 it is expected that the individual identification of the test samples even succeed in large batch sizes. This means that the hashes of two different samples can theoretically be the same, but the probability is very low. Nevertheless, the data size of one hash is 0.35 kB only and the runtime to identify a part is about 325 ms (time for image pre-processing + time for identifying 1 out of 980 parts) still having high potential for further improvements. Hence, the identification algorithm presented in this work and, in particular, its proof of concept in a real production chain are next key steps in order to apply label-/tag-free traceability in automated industrial production chains. Although further examinations concerning the proposed algorithm are possible, it is expected that part identification based on inherent surface patterns, therefore, will become a valuable complement to conventional traceability methods, such as barcode, data matrix or RFID. This is even more important considering application scenarios, for example for autonomous manufacturing, in visions related to Industry 4.0 and Smart Manufacturing.

Embodiments according to the present invention may be related to at least one of label-/tag-free traceability, fingerprint of things, surface pattern identification, perceptual hashing and physical unclonable function.

Embodiments according to the invention can be used, for example, for an identification and/or tracking of objects comprising, or being made of paper, plastic, metals, cork and even other materials. In addition, objects may be identified and/or tracked that are manufactured by molding, stamping, rolling or tooling. Therefore, embodiments according to the invention enable the identification and/or tracking of objects whose surfaces are altered e.g. due to the impact of manufacturing.

Embodiments according to the invention can be used, for example, for secure protection of objects against counterfeiting, for example by obtaining an unclonable hash value associated with the object

Implementation alternatives

Although some aspects are described in the context of an apparatus, it is clear that these aspects also represent a description of the corresponding method, where a block or device corresponds to a method step or a feature of a method step. Analogously, aspects described in the context of a method step also represent a description of a corresponding block or item or feature of a corresponding apparatus. Some or all of the method steps may be executed by (or using) a hardware apparatus, like for example, a microprocessor, a programmable computer or an electronic circuit. In some embodiments, one or more of the most important method steps may be executed by such an apparatus.

Depending on certain implementation requirements, embodiments of the invention can be implemented in hardware or in software. The implementation can be performed using a digital storage medium, for example a floppy disk, a DVD, a Blu-Ray, a CD, a ROM, a PROM, an EPROM, an EEPROM or a FLASH memory, having electronically readable control signals stored thereon, which cooperate (or are capable of cooperating) with a programmable computer system such that the respective method is performed. Therefore, the digital storage medium may be computer readable.

Some embodiments according to the invention comprise a data carrier having electronically readable control signals, which are capable of cooperating with a programmable computer system, such that one of the methods described herein is performed.

Generally, embodiments of the present invention can be implemented as a computer program product with a program code, the program code being operative for performing one of the methods when the computer program product runs on a computer. The program code may for example be stored on a machine readable carrier.

Other embodiments comprise the computer program for performing one of the methods described herein, stored on a machine readable carrier.

In other words, an embodiment of the inventive method is, therefore, a computer program having a program code for performing one of the methods described herein, when the computer program runs on a computer.

A further embodiment of the inventive methods is, therefore, a data carrier (or a digital storage medium, or a computer-readable medium) comprising, recorded thereon, the computer program for performing one of the methods described herein. The data carrier, the digital storage medium or the recorded medium are typically tangible and/or non-transitionary.

A further embodiment of the inventive method is, therefore, a data stream or a sequence of signals representing the computer program for performing one of the methods described herein. The data stream or the sequence of signals may for example be configured to be transferred via a data communication connection, for example via the Internet.

A further embodiment comprises a processing means, for example a computer, or a programmable logic device, configured to or adapted to perform one of the methods described herein.

A further embodiment comprises a computer having installed thereon the computer program for performing one of the methods described herein.

A further embodiment according to the invention comprises an apparatus or a system configured to transfer (for example, electronically or optically) a computer program for performing one of the methods described herein to a receiver. The receiver may, for example, be a computer, a mobile device, a memory device or the like. The apparatus or system may, for example, comprise a file server for transferring the computer program to the receiver.

In some embodiments, a programmable logic device (for example a field programmable gate array) may be used to perform some or all of the functionalities of the methods described herein. In some embodiments, a field programmable gate array may cooperate with a microprocessor in order to perform one of the methods described herein. Generally, the methods are preferably performed by any hardware apparatus.

The apparatus described herein may be implemented using a hardware apparatus, or using a computer, or using a combination of a hardware apparatus and a computer.

The apparatus described herein, or any components of the apparatus described herein, may be implemented at least partially in hardware and/or in software.

The methods described herein may be performed using a hardware apparatus, or using a computer, or using a combination of a hardware apparatus and a computer.

The methods described herein, or any components of the apparatus described herein, may be performed at least partially by hardware and/or by software.

The herein described embodiments are merely illustrative for the principles of the present invention. It is understood that modifications and variations of the arrangements and the details described herein will be apparent to others skilled in the art. It is the intent, therefore, to be limited only by the scope of the impending patent claims and not by the specific details presented by way of description and explanation of the embodiments herein.

References

[1] D. M. Segura Velandia, N. Kaur, W. G. Whittow, P. P. Conway, A. A. West, Towards industrial internet of things: Crankshaft monitoring, traceability and tracking using RFID, Robotics and Computer-Integrated Manufacturing 41 (2016) 66-77. doi:10.1016/j.rcim.2016.02.004, last-checked: 2019-12-06. URL http://www.sciencedirect.com/science/article/pii/S0736584516300576

[2] T. Cucu, G. Varzaru, C. Turcu, N. Codreanu, I. Plotog, R. Fuica, 1d and 2d solutions for traceability in an Electronic Manufacturing Services company, in: 31st International Spring Seminar on Electronics Technology, 2008, pp. 585-588, iSSN: 2161-2064. doi:10.1109/ISSE.2008.5276596.

[3] R. G. Qiu, RFID-enabled automation in support of factory integration, Robotics and Computer-Integrated Manufacturing 23 (6) (2007) 677-683. doi:10.1016/j.rcim.2007.02.002, last-checked: 2019-12-06. URL http://www.sciencedirect.com/science/article/pii/S073658450700018X

[4] C. N. Chong, D. Jiang, J. Zhang, L. Guo, Anti-counterfeiting with a Random Pattern, in: 2008 Second International Conference on Emerging Security Information, Systems and Technologies, 2008, pp. 146-153. doi:10.1109/SECURWARE.2008.12.

[5] G. C. Birch, B. L. Woo, C. F. LaCasse, J. J. Stubbs, A. L. Dagel, Computational optical physical unclonable functions, in: 2017 International Carnahan Conference on Security Technology (ICCST), 2017, pp. 1-6. doi:10.1109/CCST.2017.8167828.

[6] H. U. Babu, W. Stork, H. Rauhe, Anti-counterfeiting using reflective micro structures - Based on random positioning of microstructures, in: Advances in Optoelectronics and Micro/nano-optics, 2010. doi:10.1109/AOM.2010.5767157.

[7] J. Kim, J. M. Yun, J. Jung, H. Song, J.-B. Kim, H. Ihee, Anti-counterfeit nanoscale fingerprints based on randomly distributed nanowires, Nanotechnology 25 (15) (2014) 155303. doi:10.1088/0957-4484/25/15/155303, last-checked: 2019-10-02. URL http://stacks.iop.org/0957-4484/25/i=15/a=155303

[8] H. J. Bae, S. Bae, C. Park, S. Han, J. Kim, L. N. Kim, K. Kim, S.-H. Song, W. Park, S. Kwon, Biomimetic Microfingerprints for Anti-Counterfeiting Strategies, Advanced Materials 27 (12) (2015) 2083-2089. doi:10.1002/adma.201405483, last-checked: 2019-10-02. URL http://onlinelibrary.wiley.com/doi/10.1002/adma.201405483/abstract

[9] Y. Geng, J. Noh, I. Drevensek-Olenik, R. Rupp, G. Lenzini, J. P. F. Lagerwall, High-fidelity spherical cholesteric liquid crystal Bragg reflectors generating unclonable patterns for secure authentication, Scientific Reports 6 (2016) 26840. doi:10.1038/srep26840, last-checked: 2019-10-02. URL http://www.nature.com/srep/2016/160527/srep26840/full/srep26840.html

[10] R. Ishiyama, Y. Kudo, T. Takahashi, mIDoT: Micro identifier dot on things - A tiny, efficient alternative to barcodes, tags, or marking for industrial parts traceability, IEEE, 2016, pp. 781-786. doi:10.1109/ICIT.2016.7474850, last-checked: 2019-10-02. URL http://ieeexplore.ieee.org/document/7474850/

[11] A. F. Smith, P. Patton, S. E. Skrabalak, Plasmonic Nanoparticles as a Physically Unclonable Function for Responsive Anti-Counterfeit Nanofingerprints, Advanced Functional Materials 26 (9) (2016) 1315-1321.

doi:10.1002/adfm.201503989, last-checked: 2019-10-02. URL http://onlinelibrary.wiley.com/doi/10.1002/adfm.201503989/abstract

[12] Y. Kudo, H. Zwaan, T. Takahashi, R. Ishiyama, P. Jonker, Tip-on-a-chip: automatic dotting with glitter ink pen for individual identification of tiny parts, in: Proceedings of the 9th ACM Multimedia Systems Conference on - MMSys '18, ACM Press, Amsterdam, Netherlands, 2018, pp. 502-505. doi:10.1145/3204949.3208116, last-checked: 2019-10-02. URL http://dl.acm.org/citation.cfm?doid=3204949.3208116

[13] Prooftag website, last checked: 2019-06-17. URL http://www.prooftag.net/

[14] Alpvision website, last checked: 2019-06-18. URL http://www.alpvision.com/

[15] T. Takahashi, Y. Kudo, R. Ishiyama, Mass-produced parts traceability system based on automated scanning of fingerprint of things, in: 2017 Fifteenth IAPR International Conference on Machine Vision Applications (MVA), 2017, pp. 202-206. doi:10.23919/MVA.2017.7986836.

[16] E. Metois, P. Yarin, N. Salzman, J. R. Smith, FiberFingerprint identification, in: Proc. 3rd Workshop on Automatic Identification, 2002, pp. 147-154, last-checked: 2019-10-02. URL http://www.metois.com/Docs/ffid2002.pdf

[17] J.D. R. Buchanan, R. P. Cowburn, A.-V. Jausovec, D. Petit, P. Seem, G. Xiong, D. Atkinson, K. Fenton, D. A. Allwood, M. T. Bryan, Forgery: 'Fingerprinting' documents and packaging, Nature 436 (7050) (2005) 475-475. doi:10.1038/436475a, last-checked: 2019-10-02. URL http://www.nature.com/doifinder/10.1038/436475a

[18] A. Sharma, L. Subramanian, E. A. Brewer, PaperSpeckle: Microscopic Fingerprinting of Paper, in: Proceedings of the 18th ACM Conference on Computer and Communications Security, CCS '11, ACM, New York, NY, USA, 2011, pp. 99-110. doi:10.1145/2046707.2046721, last-checked: 2019-10-02. URL http://doi.acm.org/10.1145/2046707.2046721

[19] B. Wigger, T. Meissner, A. Foerste, V. Jetter, A. Zimmermann, Using unique surface patterns of injection moulded plastic components as an image based Physical Unclonable Function for secure component identification, Scientific Reports 8 (1) (2018) 4738. doi:10.1038/s41598-018-22876-8, last-checked: 2019-10-02. URL https://www.nature.com/articles/s41598-018-22876-8

[20] T. Takahashi, R. Ishiyama, FIBAR: Fingerprint Imaging by Binary An- gular Reflection for Individual Identification of Metal Parts, in: 2014 Fifth International Conference on Emerging Security Technologies, 2014, pp. 46-51. doi:10.1109/EST.2014.25.

[21] A. Valehi, A. Razi, B. Cambou, W. Yu, M. Kozicki, A graph matching algorithm for user authentication in data networks using image-based physical unclonable functions, in: 2017 Computing Conference, 2017, pp. 863-870. doi:10.1109/SAI.2017.8252196.

[22] A. Dachowicz, S. C. Chaduvula, M. Atallah, J. H. Panchal, Microstructure-Based Counterfeit Detection in Metal Part Manufacturing, JOM 69 (11) (2017) 2390-2396. doi:10.1007/s11837-017-2502-8, last-checked: 2019-10-02. URL http://link.springer.com/10.1007/s11837-017-2502-8

[23] V. Costa, A. Sousa, A. Reis, Preventing Wine Counterfeiting by Individual Cork Stopper Recognition Using Image Processing Technologies, Journal of Imaging 4 (4) (2018) 54. doi:10.3390/jimaging4040054, last-checked: 2019-10-02. URL http://www.mdpi.com/2313-433X/4/4/54

[24] F. Beekhof, S. Voloshynovskiy, O. J. Koval, R. Vill'an, T. Pun, Secure surface identification codes, in: Security, Forensics, Steganography, and Watermarking of Multimedia Contents, 2008, pp. 68190D, last-checked: 2017-07-03. URL http://proceedings.spiedigitallibrary.org/pdfaccess.ashx?url=/data/confer

[25] C. Di Venuto, M. Kutter, F. Jordan, Means for using microstructure of materials surface as a unique identifier, last-checked: 2019-10-02 (May 2008). URL http://www.google.com/patents/US8180174

[26] A. Baecker, T. Birsztejn, M. Gerigk, R. Imhaeuser, C. Roth, W. Speth, S. Vougioukas, Identifizierung und/oder Authentifizierung von Gegenstaenden anhand ihrer Oberflaechenbeschaffenheit last-checked: 2019- 10-02 (Dec.

2010). URL http://www.google.ch/patents/DE102009025061A1

[27] Covisus website, last checked: 2019-06-18. URL https://covisus.com/

[28] R. Ishiyama, T. Takahashi, Y. Kudo, Individual Recognition Based on the Fingerprint of Things Expands the Applications of IoT : NEC Technical Journal | NEC, last-checked: 2019-10-02 (Dec. 2016). URL http://www.nec.com/en/global/techrep/journal/g16/n01/160120.html

[29] R. Ishiyama, T. Takahashi, K. Makino, Y. Kudo, Fast image matching based on fourier-mellin phase correlation for tag-less identification of mass-produced parts.

[30] B. Wigger, T. Meissner, M. Winkler, A. Foerste, V. Jetter, A. Buchholz, A. Zimmermann, Label-/tag-free traceability of electronic PCB in SMD assembly based on individual inherent surface patterns, The International Journal of Advanced Manufacturing Technology 98 (9-12) (2018) 3081-3090. doi:10.1007/s00170-018-2492-x, last-checked: 2019-10-02. URL http://link.springer.com/10.1007/s00170-018-2492-x

[31] Frauhofer website - last checked: 2019-06-30. URL https://www.ipm.fraunhofer.de/en/bu/production-control-inline-measurement

[32] B. Wigger, M. Barth, fi report of the project Track4Quality, German, Tech. rep., TIB Hannover (2018).

[33] Celanese, LCP Vectra E840i LDS - datasheet, last-checked: 2019-10-02 (07 2014). URL http://www.campusplastics.com/material/pdf/32178/VECTRAE840i-LDS?sLg=de

[34] LPKF Laser and Electronics AG, LPKF LDS: Laser Direct Structuring for 3D Molded Interconnect Devices (Oct. 2018).

[35] G. Bradski, Dr. Dobb's Journal of Software Tools.

[36] W. Li, Perceptual multimedia hashing, PhD Thesis, Department of Elec- trical Engineering (ESAT), Katholieke Universiteit Leuven (2012).

[37] C. Kailasanathan, R. S. Naini, P. Ogunbona, Compression tolerant DCT based image hash, in: 23rd International Conference on Distributed Computing Systems Workshops, 2003. Proceedings., 2003, pp. 562-567. doi: 10.1109/ICDCSW.2003.1203613.

[38] R. Maes, I. Verbauwhede, Physically unclonable functions: A study on the state of the art and future research directions, in: Towards Hardware-Intrinsic Security, Springer, 2010, pp. 3-37, last-checked: 2016-03-10. URL http://link.springer.com/10.1007/978-3-642-14452-3_1

**Claims**

1. An apparatus (100; 150) for obtaining a hash value (100a) associated with an object (110),
   wherein the apparatus (100; 150) is configured to apply a multi-dimensional transform ($100_2$) to an image (120a) of the object (110) or of a surface of the object (110), in order to obtain ($100_6$) a multi-dimensional array (600) of transform coefficients,
   wherein the apparatus (100; 150) is configured to obtain the hash value (100a)

   using transform coefficients (1110) for which a first of the transform coefficient indices is smaller than a first predetermined value but for which a second of the transform coefficient indices is equal to or larger than a second predetermined value and
   using transform coefficients (1110) for which the second of the transform coefficient indices is smaller than the second predetermined value but for which the first of the transform coefficient indices is equal to or larger than the first predetermined value
   while leaving transform coefficients (1110) for which the first transform coefficient index is smaller than the first predetermined value and for which the second transform coefficient index is smaller than the second predetermined value unconsidered in the determination of the hash value (100a).

2. Apparatus (100; 150) according to claim 1, wherein the apparatus (100; 150) is configured to also use one or more transform coefficients (1110) for which the first transform coefficient index is equal to or larger than the first predetermined value and for which the second transform coefficient is equal to or larger than the second predetermined value for the determination of the hash value (100a).

3. Apparatus (100; 150) according to one of claims 1 or 2, wherein the apparatus (100; 150) is configured to obtain a two-dimensional array (600) of transform coefficients $X_{k_1,k_2}$ on the basis of the image (120a) of the object (110),
wherein $0<=k_1<=k_{1max}$,
wherein $0<=k_2<=k_{2max}$,
wherein the apparatus (100; 150) is configured to obtain the hash value (100a) using transform coefficients (1110) which fulfill the condition
$((k_{1lowbound}<=k_1<=k_{1highbound})$ or $(k_{2lowbound}<=k_2<=k_{2highbound}))$
while leaving transform coefficients (1110) which fulfill the condition
$((k_1<k_{1lowbound})$ and $(k_2<k_{2lowbound}))$
and transform coefficients (1110) which fulfil the condition
$k_1>k_{1highbound}$
and transform coefficients (1110) which fulfil the condition
$k_2>k_{2highbound}$
unconsidered in the determination of the hash value (100a).

4. Apparatus (100; 150) according to one of claims 1 to 3, wherein the apparatus (100; 150) is configured to obtain the hash value (100a) on the basis of transform coefficients (1110) in an L-shaped region (1120) of a two-dimensional map of transform coefficients (1110), while leaving transform coefficients (1110) for which both transform coefficient indices are smaller than respective predetermined values unconsidered in the determination of the hash value (100a).

5. Apparatus (100; 150) according to one of claims 1 to 4, wherein the apparatus (100; 150) is configured to obtain the transform coefficients (1110) using a 2-dimensional discrete cosine transform of an image (120a) of the object (110).

6. Apparatus (100; 150) according to one of claims 1 to 5, wherein the apparatus (100; 150) is configured to selectively leave a plurality of transform coefficients (1110), which are associated with spatial frequencies in an environment of a zero spatial frequency unconsidered for the determination of the hash value (100a).

7. Apparatus (100; 150) according to one of claims 1 to 6,
wherein the apparatus (100; 150) is configured to selectively leave a plurality of transform coefficients (1110) in a maximum spatial frequency region unconsidered for the determination of the hash values (100a).

8. Apparatus (100; 150) according to one of claims 1 to 7,
wherein the apparatus (100; 150) is configured to selectively leave a plurality of transform coefficients (1110) having a spatial frequency in a first direction which is larger than a first maximum spatial frequency threshold and/or having a spatial frequency in a second direction which is larger than a second maximum spatial frequency threshold unconsidered for the determination of the hash values (100a).

9. Apparatus (100; 150) according to one of claims 1 to 8,
wherein the apparatus (100; 150) is configured to selectively use a plurality of transform coefficients (1110) which lie

   - between a group of transform coefficients, which are associated with spatial frequencies in an environment of a zero spatial frequency, and
   - a group of transform coefficients in a maximum spatial frequency region

   for the determination of the hash value (100a).

10. Apparatus (100; 150) according to one of claims 1 to 9,
wherein the apparatus (100; 150) is configured to reduce an image resolution before deriving the transform coefficients (1110).

11. Apparatus (100; 150) according to one of claims 1 to 10,
wherein the apparatus (100; 150) is configured to determine the transform coefficients (1110) $X_{k1,k2}$ according to

$$X_{k_1,k_2} = \sum_{n_1=0}^{N_1-1} \sum_{n_2=0}^{N_2-1} x_{n_1,n_2} \cos\left[\frac{\pi}{N_1}\left(n_1 + \frac{1}{2}\right)k_1\right] \cos\left[\frac{\pi}{N_2}\left(n_2 + \frac{1}{2}\right)k_2\right]$$

wherein $X_{n1,n2}$ designate pixels of the image (120a) of the object (110),
wherein $N_1$ is a dimension of the image (120a) in a first direction,
wherein $N_2$ is a dimension of the image (120a) in a second direction,
wherein $n_1$ and $n_2$ are running variables,
wherein $k_1$ is a first transform coefficient index, and
wherein $k_2$ is a second transform coefficient index.

12. Apparatus (100; 150) according to one of claims 1 to 11,
wherein the apparatus (100; 150) is configured to binarize the transform coefficients (1110), in order to obtain the hash value (100a).

13. Apparatus (100; 150) according to one of claims 1 to 12,
wherein the apparatus (100; 150) is configured to determine an average value of the considered transform coefficients (1110), and
wherein the apparatus (100; 150) is configured to compare the considered hash values (100a) to the average value, in order to obtain corresponding hash values (100a) in dependence on a result of the comparison.

14. An object identifier (300),
wherein the object identifier (300) comprises an apparatus (100; 150; 200) for obtaining a hash value (100a), according to one of the previous claims, and
a hash value comparator (310) configured to compare the obtained hash value (100a) with one or more reference hash values, and to provide an object identification information on the basis of the comparison.

15. Object identifier (300) according to claim 14, wherein the value comparator (310) is configured to determine one or more hamming distances between the obtained hash value (100a) and one or more reference hash values, in order to perform the comparison.

16. An apparatus (200) for obtaining a hash value (100a) associated with an object (110),
wherein the apparatus (100) is configured to apply a multi-dimensional transform to an image (120a) of the object (110) or of a surface of the object (110), in order to obtain a multi-dimensional array (600) of transform coefficients, and
wherein the apparatus (200) is configured to binarize considered transform coefficients, in order to obtain the hash value (100a).

17. Apparatus (200) according to claim 16,
wherein the apparatus (200) is configured to determine an average value of the considered transform coefficients, and
wherein the apparatus (200) is configured to compare the considered hash values (100a) to the average value, in order to obtain corresponding hash values (100a) in dependence on a result of the comparison.

18. Apparatus (200) according to claim 16 or 17, wherein the apparatus (200) is configured to obtain the hash value (100a) using transform coefficients (1110) for which a first of the transform coefficient indices is smaller than a first predetermined value but for which a second of the transform coefficient indices is equal to or larger than a second predetermined value and using transform coefficients (1110) for which the second of the transform coefficient indices is smaller than the second predetermined value but for which the first of the transform coefficient indices is equal to or larger than the first predetermined value while leaving transform coefficients (1110) for which the first transform coefficient index is smaller than the first predetermined value and for which the second transform coefficient is smaller than the second predetermined value unconsidered in the determination of the hash value (100a).

19. A method (400) for obtaining a hash value (100a) associated with an object (110),
wherein the method comprises applying a multi-dimensional transform to an image (120a) of the object (110) or of a surface of the object (110), in order to obtain a multi-dimensional array (600) of transform coefficients,
wherein the method comprises obtaining the hash value (100a) using transform coefficients (1110) for which a first of the transform coefficient indices is smaller than a first predetermined value but for which a second of the transform coefficient indices is equal to or larger than a second predetermined value and using transform coefficients (1110) for which the second of the transform coefficient indices is smaller than the second predetermined value but for which the first of the transform coefficient indices is equal to or larger than the first predetermined value while leaving transform coefficients (1110) for which the first transform coefficient index is smaller than the first predetermined value and for which the second transform coefficient index is smaller than the second predetermined value unconsidered in the determination of the hash value (100a).

20. A method (400) for identifying an object (110), wherein the method comprises obtaining a hash value (100a), according to claim 19, and
comparing the obtained hash value (100a) with one or more reference hash values, and providing an object identification information on the basis of the comparison.

21. A method (500) for obtaining a hash value (100a) associated with an object (110),
wherein the method comprises applying a multi-dimensional transform to an image (120a) of the object (110) or of a surface of the object (110), in order to obtain a multi-dimensional array (600) of transform coefficients, and
wherein the method comprises binarizing considered transform coefficients, in order to obtain the hash value (100a).

22. A computer program for performing a method according to one of claims 19 to 21 when the computer program runs on a computer.

100

120

acquisition
unit
(optional)

image

120a

$100_2$

transformer

$100_{2,a}$

$100_6$

hash value
obtainer

100a

110a

110

object
(optional)

## Fig. 1

150

(optional)  $100_{1,a}$

image

120a

$100_1$

image
mani-
pulator

$100_{2,a}$

trans-
former

$100_2$

$100_{3,a}$

selector

$100_3$

(optional)  $100_{4,a}$

binari-
zation
unit

$100_4$

$100_6$

hash
value
obtainer

100a

$100_5$

avera-
ging
unit

$100_{5,a}$

## Fig. 2

Fig. 3a

Fig. 3b

400

Applying a multi-dimensional transform — 410

↓

Obtaining the hash value — 420

↓

Comparing the obtained hash value — 430

## Fig. 4

500

Applying a multi-dimensional transform — 510

↓

Binarizing considered transform coefficients — 520

## Fig. 5

600

630                                                    610

| $k_1$ \ $k_2$ | 0 | 1 | $\cdots$ | * | $k_{2,lb}$ | * | $\cdots$ | * | * | * |
|---|---|---|---|---|---|---|---|---|---|---|
| 0 | * | * | $\cdots$ | * | * | * | $\cdots$ | * | * | $\cdots$ |
| 1 | * | * | $\cdots$ | * | * | * | $\cdots$ | * | * | $\cdots$ |
| $\vdots$ | $\vdots$ | $\vdots$ | $\cdots$ | * | * | * | $\cdots$ | * | * | $\cdots$ |
| * | * | * | * | * | * | * | $\cdots$ | * | * | $\cdots$ |
| $k_{1,lb}$ | * | * | * | * | * | * | $\cdots$ | * | * | $\cdots$ |
| * | * | * | * | * | * | * | $\cdots$ | * | * | $\cdots$ |
| $\vdots$ | $\vdots$ | $\vdots$ | $\vdots$ | $\vdots$ | $\vdots$ | $\vdots$ | $\cdots$ | * | * | $\cdots$ |
| * | * | * | * | * | * | * | * | * | * | $\cdots$ |
| * | * | * | * | * | * | * | * | * | * | $\cdots$ |
| $\vdots$ | $\vdots$ | $\vdots$ | $\vdots$ | $\vdots$ | $\vdots$ | $\vdots$ | $\vdots$ | $\vdots$ | $\vdots$ | $\cdots$ |

620                                    640

legend

| | |
|---|---|
| ------------- | 610 |
| — — — - | 620 |
| ——— — | 630 |
| —·—·—·— | 640 |

Fig. 6

Fig. 7

Fig. 8

940
objective and
illumination unit

930
automatically movable
sample table

920
sample holder for
parts with sprue

910
sample holder for
parts without sprue

Fig. 9

Fig. 10

a)

example

image

300 x 300 pixels

b)

8 x 8 pixels

c)

| $k_2=0$ | 1 | 2 | 3 | 4 | 5 | 6 | 7 |
|---|---|---|---|---|---|---|---|
| $k_1=0$ 1141.8 | -10.7 | 45.0 | 10.9 | 2.75 | 46.1 | -31.9 | -4.5 |
| 1  290.0 | 14.6 | -13.7 | -22.2 | 62.3 | -26.4 | -40.2 | 24.3 |
| 2  36.5 | 0.0 | 15.4 | -10.8 | -40.3 | -28.3 | 33.7 | 1.3 |
| 3  -119.3 | -16.2 | -42.0 | 47.5 | -45.5 | 52.1 | 43.6 | -41.0 |
| 4  139.3 | 10.7 | -45.0 | -10.9 | -2.75 | -46.1 | 31.9 | 4.5 |
| 5  10.2 | -4.5 | 61.3 | -16.0 | -42.7 | -14.7 | 13.3 | 6.6 |
| 6  -88.2 | 0.1 | -37.3 | 26.1 | 97.3 | 68.2 | -81.4 | -3.1 |
| 7  -50.7 | 8.2 | 73.1 | -44.9 | 1.9 | -47.2 | -21.5 | 33.6 |

1130   1120   1110   1110   1110

Fig. 11
(Part 1)

d) considered coefficients:

| 10.9 | 2.75 | 46.1 | -22.2 | 62.3 | -26.4 | -10.8 | · · · |

| · · · | -46.1 | 10.2 | -4.5 | 61.3 | -16.0 | -42.7 | -14.7 |

mean value of the considered coefficients: -3.35

e) binarization:

| 1 | 1 | 1 | 0 | 1 | 0 | 0 | · · · |

| · · · | 0 | 1 | 0 | 1 | 0 | 0 | 0 |

## Fig. 11
(Part 2)

a)

original image:
1210

ROI image:
1220

1230
hash value:
010110...

1240
part registration:
store hash value
in database

part identification:
compare hash values
(hamming-distance)

1250

b)

hash #1: | 0 | 1 | 0 | 0 | 1 | 0 | 1 | 0 | 1 | 1 |  1260

hash #2: | 1 | 0 | 1 | 0 | 0 | 0 | 1 | 1 | 0 | 1 |  1270

1280
hash length: 10
equal bits:      4
differing bits: 6

1290
hamming-
distance: 0.60

Fig. 12

EP 3 840 289 A1

Fig. 13

LDS ⌒1410

EP ⌒1410

b)

LDS

EP

Fig. 14

EP 3 840 289 A1

Europäisches
Patentamt
European
Patent Office
Office européen
des brevets

## EUROPEAN SEARCH REPORT

Application Number

EP 20 21 5194

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | Li Weng: "Perceptual Multimedia Hashing", , 1 September 2012 (2012-09-01), XP055354827, Retrieved from the Internet: URL:https://www.esat.kuleuven.be/cosic/publications/thesis-217.pdf [retrieved on 2017-03-14] * Chapter 8; figures 8.1, 8.4 * | 1-22 | INV. H04L9/32 |
| A | US 2005/053239 A1 (NOMIZU YASUYUKI [JP] ET AL) 10 March 2005 (2005-03-10) * paragraph [0174] - paragraph [0215] * | 1-22 | |
| A,D | KAILASANATHAN C ET AL: "Compression tolerant DCT based image hash", MULTIMEDIA SIGNAL PROCESSING, 2002 IEEE WORKSHOP ON 9-11 DEC. 2002, PISCATAWAY, NJ, USA,IEEE, 19 May 2003 (2003-05-19), pages 562-567, XP010642431, ISBN: 978-0-7803-7713-4 * Sections 2 and 3 * | 1-22 | |

TECHNICAL FIELDS SEARCHED (IPC)

H04L

The present search report has been drawn up for all claims

| Place of search | Date of completion of the search | Examiner |
|---|---|---|
| Munich | 3 May 2021 | Tenbieg, Christoph |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 20 21 5194

This annex lists the patent family members relating to the patent documents cited in the above-mentioned European search report.
The members are as contained in the European Patent Office EDP file on
The European Patent Office is in no way liable for these particulars which are merely given for the purpose of information.

03-05-2021

| Patent document cited in search report | Publication date | Patent family member(s) | Publication date |
|---|---|---|---|
| US 2005053239 A1 | 10-03-2005 | JP 3960597 B2<br>JP 2004165778 A<br>US 2005053239 A1 | 15-08-2007<br>10-06-2004<br>10-03-2005 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **D. M. SEGURA VELANDIA ; N. KAUR ; W. G. WHITTOW ; P. P. CONWAY ; A. A. WEST.** Towards industrial internet of things: Crankshaft monitoring, traceability and tracking using RFID. *Robotics and Computer-Integrated Manufacturing,* 2016, vol. 41, 66-77, http://www.sciencedirect.com/science/article/pii/S0736584516300576
- **T. CUCU ; G. VARZARU ; C. TURCU ; N. CODREANU ; I. PLOTOG ; R. FUICA.** 1d and 2d solutions for traceability in an Electronic Manufacturing Services company. *31st International Spring Seminar on Electronics Technology,* 2008, ISSN 2161-2064, 585-588
- **R. G. QIU.** RFID-enabled automation in support of factory integration. *Robotics and Computer-Integrated Manufacturing,* 2007, vol. 23 (6), 677-683, http://www.sciencedirect.com/science/article/pii/S073658450700018X
- **C. N. CHONG ; D. JIANG ; J. ZHANG ; L. GUO.** Anti-counterfeiting with a Random Pattern, in: 2008 Second International Conference on Emerging Security Information. *Systems and Technologies,* 2008, 146-153
- **G. C. BIRCH ; B. L. WOO ; C. F. LACASSE ; J. J. STUBBS ; A. L. DAGEL.** Computational optical physical unclonable functions. *2017 International Carnahan Conference on Security Technology (ICCST),* 2017, 1-6
- **H. U. BABU ; W. STORK ; H. RAUHE.** Anti-counterfeiting using reflective micro structures - Based on random positioning of microstructures. *Advances in Optoelectronics and Micro/nano-optics,* 2010
- **J. KIM ; J. M. YUN ; J. JUNG ; H. SONG ; J.-B. KIM ; H. IHEE.** Anti-counterfeit nanoscale fingerprints based on randomly distributed nanowires. *Nanotechnology,* 2014, vol. 25 (15), 155303, http://stacks.iop.org/0957-4484/25/i=15/a=155303
- **H. J. BAE ; S. BAE ; C. PARK ; S. HAN ; J. KIM ; L. N. KIM ; K. KIM ; S.-H. SONG ; W. PARK ; S. KWON.** Biomimetic Microfingerprints for Anti-Counterfeiting Strategies. *Advanced Materials,* 2015, vol. 27 (12), 2083-2089, http://onlinelibrary.wiley.com/doi/10.1002/adma.201405483/abstract

- **Y. GENG ; J. NOH ; I. DREVENSEK-OLENIK ; R. RUPP ; G. LENZINI ; J. P. F. LAGERWALL.** High-fidelity spherical cholesteric liquid crystal Bragg reflectors generating unclonable patterns for secure authentication. *Scientific Reports,* 2016, vol. 6, 26840, http://www.nature.com/srep/2016/160527/srep26840/full/srep26840.html
- **R. ISHIYAMA ; Y. KUDO ; T. TAKAHASHI.** mIDoT: Micro identifier dot on things - A tiny, efficient alternative to barcodes, tags, or marking for industrial parts traceability. IEEE, 2016, 781-786
- **A. F. SMITH ; P. PATTON ; S. E. SKRABALAK.** Plasmonic Nanoparticles as a Physically Unclonable Function for Responsive Anti-Counterfeit Nanofingerprints. *Advanced Functional Materials,* 2016, vol. 26 (9), 1315-1321, http://onlinelibrary.wiley.com/doi/10.1002/adfm.201503989/abstract
- Tip-on-a-chip: automatic dotting with glitter ink pen for individual identification of tiny parts. **Y. KUDO ; H. ZWAAN ; T. TAKAHASHI ; R. ISHIYAMA ; P. JONKER.** Proceedings of the 9th ACM Multimedia Systems Conference on - MMSys '18. ACM Press, 2018, 502-505
- *Prooftag website,* 17 June 2019, http://www.prooftag.net
- *Alpvision website,* 18 June 2019, http://www.alpvision.com
- **T. TAKAHASHI ; Y. KUDO ; R. ISHIYAMA.** Mass-produced parts traceability system based on automated scanning of fingerprint of things. *2017 Fifteenth IAPR International Conference on Machine Vision Applications (MVA),* 2017, 202-206
- **E. METOIS ; P. YARIN ; N. SALZMAN ; J. R. SMITH.** FiberFingerprint identification. *Proc. 3rd Workshop on Automatic Identification,* 2002, 147-154, http://www.metois.com/Docs/ffid2002.pdf
- **J.D. R. BUCHANAN ; R. P. COWBURN ; A.-V. JAUSOVEC ; D. PETIT ; P. SEEM ; G. XIONG ; D. ATKINSON ; K. FENTON ; D. A. ALLWOOD ; M. T. BRYAN.** Forgery: 'Fingerprinting' documents and packaging. *Nature,* 2005, vol. 436 (7050), 475-475, http://www.nature.com/doifinder/10.1038/436475a

- PaperSpeckle: Microscopic Fingerprinting of Paper. **A. SHARMA ; L. SUBRAMANIAN ; E. A. BREWER.** Proceedings of the 18th ACM Conference on Computer and Communications Security, CCS '11. ACM, 2011, 99-110
- **B. WIGGER ; T. MEISSNER ; A. FOERSTE ; V. JETTER ; A. ZIMMERMANN.** Using unique surface patterns of injection moulded plastic components as an image based Physical Unclonable Function for secure component identification. *Scientific Reports,* 2018, vol. 8 (1), 4738, https://www.nature.com/articles/s41598-018-22876-8
- **T. TAKAHASHI ; R. ISHIYAMA.** FIBAR: Fingerprint Imaging by Binary An- gular Reflection for Individual Identification of Metal Parts. *2014 Fifth International Conference on Emerging Security Technologies,* 2014, 46-51
- **A. VALEHI ; A. RAZI ; B. CAMBOU ; W. YU ; M. KOZICKI.** A graph matching algorithm for user authentication in data networks using image-based physical unclonable functions. *2017 Computing Conference,* 2017, 863-870
- **A. DACHOWICZ ; S. C. CHADUVULA ; M. ATALLAH ; J. H. PANCHAL.** Microstructure-Based Counterfeit Detection in Metal Part Manufacturing. *JOM,* 2017, vol. 69 (11), 2390-2396, http://link.springer.com/10.1007/s11837-017-2502-8
- **V. COSTA ; A. SOUSA ; A. REIS.** Preventing Wine Counterfeiting by Individual Cork Stopper Recognition Using Image Processing Technologies. *Journal of Imaging,* 2018, vol. 4 (4), 54, http://www.mdpi.com/2313-433X/4/4/54
- **F. BEEKHOF ; S. VOLOSHYNOVSKIY ; O. J. KOVAL ; R. VILL'AN ; T. PUN.** Secure surface identification codes. *Security, Forensics, Steganography, and Watermarking of Multimedia Contents,* 2008, 68190D, http://proceedings.spiedigitallibrary.org/pdfaccess.ashx?url=/data/confer
- **C. DI VENUTO ; M. KUTTER ; F. JORDAN.** *Means for using microstructure of materials surface as a unique identifier,* May 2008, http://www.google.com/patents/US8180174
- **A. BAECKER ; T. BIRSZTEJN ; M. GERIGK ; R. IMHAEUSER ; C. ROTH ; W. SPETH ; S. VOUGIOUKAS.** *Identifizierung und/oder Authentifizierung von Gegenstaenden anhand ihrer Oberflaechenbeschaffenheit,* December 2010, http://www.google.ch/patents/DE102009025061A1
- *Covisus website,* 18 June 2019, https://covisus.com/
- **R. ISHIYAMA ; T. TAKAHASHI ; Y. KUDO.** *Individual Recognition Based on the Fingerprint of Things Expands the Applications of IoT : NEC Technical Journal | NEC,* December 2016, http://www.nec.com/en/global/techrep/journal/g16/n01/160120.html
- **R. ISHIYAMA ; T. TAKAHASHI ; K. MAKINO ; Y. KUDO.** *Fast image matching based on fourier-mellin phase correlation for tag-less identification of mass-produced parts*
- **B. WIGGER ; T. MEISSNER ; M. WINKLER ; A. FOERSTE ; V. JETTER ; A. BUCHHOLZ ; A. ZIMMERMANN.** Label-/tag-free traceability of electronic PCB in SMD assembly based on individual inherent surface patterns. *The International Journal of Advanced Manufacturing Technology,* 2018, vol. 98 (9-12), 3081-3090, http://link.springer.com/10.1007/s00170-018-2492-x
- *Frauhofer website,* 30 June 2019, https://www.ipm.fraunhofer.de/en/bu/production-control-inline-measurement
- fi report of the project Track4Quality, German. **B. WIGGER ; M. BARTH.** Tech. rep. TIB, 2018
- LCP Vectra E840i LDS - datasheet. Celanese, July 2014
- LPKF LDS: Laser Direct Structuring for 3D Molded Interconnect Devices. LPKF Laser and Electronics AG, October 2018
- **G. BRADSKI ; DR. DOBB.** *Journal of Software Tools*
- Perceptual multimedia hashing. **W. LI.** PhD Thesis. Department of Elec- trical Engineering (ESAT), Katholieke Universiteit Leuven, 2012
- **C. KAILASANATHAN ; R. S. NAINI ; P. OGUNBONA.** Compression tolerant DCT based image hash. *23rd International Conference on Distributed Computing Systems Workshops, 2003. Proceedings,* 2003, 562-567
- Physically unclonable functions: A study on the state of the art and future research directions. **R. MAES ; I. VERBAUWHEDE.** Towards Hardware-Intrinsic Security. Springer, 2010, 3-37